# EUROPEAN PATENT APPLICATION

(11) **EP 3 168 786 A1**
(43) Date of publication of application: **17.05.2017**
(21) Application number: 16195719.6
(22) Date of filing: 26.10.2016
(51) Int. Cl.: G06K 19/073

(54) **PORTABLE ELECTRONIC DEVICE AND IC CARD**

(30) Priority: 16.11.2015 JP 2015223895; 05.08.2016 JP 2016155033
(71) Applicant: Kabushiki Kaisha Toshiba, Minato-ku Tokyo 105-8001 (JP)
(72) Inventor: KISHIMOTO, Ariyuki, Tokyo, Tokyo 105-8001 (JP)
(74) Representative: Horn Kleimann Waitzhofer Patentanwälte PartG mbB

(57) **Abstract**

A portable electronic device (1) has a confidential data storage (81) , a disclosure method selection unit (82) and a disclosure processing unit (52) . The confidential data storage stores confidential data. The disclosure method selection unit selects disclosure method information indicating a data disclosure method for disclosing the confidential data stored in the confidential data storage, based on user identification information for identifying a user received from an external apparatus. The disclosure processing unit generates output data in which at least a portion of the confidential data is hidden in accordance with the disclosure method information selected by the disclosure method selection, and transmits the output data to the external apparatus.

## Description

### FIELD

Embodiments of the present invention relate to a portable electronic device and an IC card.

### BACKGROUND

In recent years, portable electronic devices such as IC cards that have a built-in IC (Integrated Circuit) chip are widely used. In conventional portable electronic devices, techniques are known that make it possible to change, depending on the user, whether or not to output confidential data such as personal information.

There were cases where conventional portable electronic devices could not change, depending on a user, portions of confidential data to be disclosed, thus lowering the convenience.

### BRIEF DESCRIPTION OF THE DRAWINGS

Fig. 1 is an external diagram showing an example of an IC card according to a first embodiment;
Fig. 2 is a diagram showing an example of a hardware configuration of the IC card according to the first embodiment;
Fig. 3 is a block diagram showing an example of a functional configuration of the IC card according to the first embodiment;
Fig. 4 is a diagram showing a data example in a disclosure method storage according to the first embodiment;
Fig. 5 is a diagram showing an example of a data format of a data disclosure request command according to the first embodiment;
Fig. 6 is a diagram showing an example of a normal response to a data disclosure request command according to the first embodiment;
Fig. 7 is a diagram showing an example of an abnormal response to a data disclosure request command according to the first embodiment;
Fig. 8 is a diagram showing an example of an operation of a data disclosure request command according to the first embodiment;
Fig. 9 is a diagram showing another example of an operation of a data disclosure request command according to the first embodiment;
Fig. 10 is a flowchart showing an example of an operation of a data disclosure request command according to the first embodiment;
Fig. 11 is a block diagram showing an example of a functional configuration of an IC card according to a second embodiment;
Fig. 12 is a diagram showing an example of an abnormal response to a data disclosure request command according to the second embodiment;
Fig. 13 is a diagram showing an example of an operation of a data disclosure request command according to the second embodiment;
Fig. 14 is a flowchart showing an example of an operation of a data disclosure request command according to the second embodiment;
Fig. 15 is a block diagram showing an example of a functional configuration of an IC card according to a third embodiment;
Fig. 16 is a diagram showing an example of a data format of a data disclosure method registration command according to the third embodiment;
Fig. 17 is a diagram showing an example of an operation of a data disclosure method registration command according to the third embodiment;
Fig. 18 is a flowchart showing an example of an operation of a data disclosure method registration command according to the third embodiment;
Fig. 19 is a block diagram showing an example of a functional configuration of an IC card according to a fourth embodiment;
Fig. 20 is a diagram showing a data example in a disclosure method storage according to the fourth embodiment;
Fig. 21 is a diagram showing an example of a normal response to a data disclosure request command according to the fourth embodiment;
Fig. 22 is a diagram showing an example of an operation of a data disclosure request command according to the fourth embodiment;
Fig. 23 is a flowchart showing an example of an operation of a data disclosure request command according to the fourth embodiment;
Fig. 24 is a block diagram showing an example of a functional configuration of an IC card according to a fifth embodiment;
Fig. 25 is a diagram showing an example of a data format of a data disclosure request command according to the fifth embodiment;
Fig. 26 is a diagram showing an example of an operation of a data disclosure request command according to the fifth embodiment;
Fig. 27 is a flowchart showing an example of an operation of a data disclosure request command according to the fifth embodiment;
Fig. 28 is a block diagram showing an example of a functional configuration of an IC card according to a sixth embodiment;
Fig. 29 is a diagram showing an example of a data format of an authentication command according to the sixth embodiment;
Fig. 30 is a diagram showing an example of operations of an authentication command and a data disclosure request command according to the sixth embodiment;
Fig. 31 is a flowchart showing an example of an operation of an authentication command according to the sixth embodiment;
Fig. 32 is a flowchart showing an example of an operation of a data disclosure request command according to the sixth embodiment;
Fig. 33 is a block diagram showing an example of a functional configuration of an IC card according to a seventh embodiment;
Fig. 34 is a diagram showing a data example in an authentication information storage according to the seventh embodiment;
Fig. 35 is a diagram showing a data example in an authentication result storage according to the seventh embodiment;
Fig. 36 is a flowchart showing an example of an operation of an authentication command according to the seventh embodiment;
Fig. 37 is a flowchart showing an example of an operation of a data disclosure request command according to the seventh embodiment;
Fig. 38 is a block diagram showing an example of a functional configuration of an IC card according to an eighth embodiment; and
Fig. 39 is a diagram showing a data example in an authentication information storage according to the eighth embodiment.

### DETAILED DESCRIPTION

A portable electronic device of embodiments of the present invention has a confidential data storage, a disclosure method selection unit and a disclosure processing unit. The confidential data storage stores confidential data. The disclosure method selection unit selects disclosure method information indicating a data disclosure method for disclosing the confidential data stored in the confidential data storage, based on user identification information for identifying a user received from an external apparatus. The disclosure processing unit transmits, to the external apparatus, at least a portion of the confidential data is hidden in accordance with the disclosure method information selected by the disclosure method selection unit.

A portable electronic device and an IC card of embodiments of the present invention will be described below with reference to the drawings.

### First Embodiment

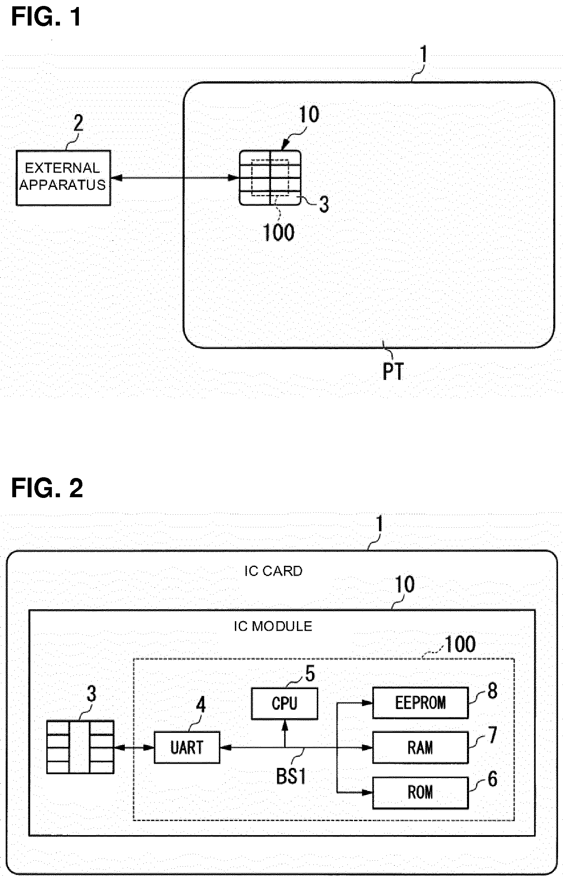

In this embodiment, an IC card will be described as an example of a portable electronic device. Fig. 1 is an external diagram showing an example of an IC card 1 of the first embodiment.

As shown in Fig. 1, the IC card 1 is provided with an IC module 10. If the IC card 1 is a contact-type IC card, the IC module 10 is provided with an IC chip 100 in the IC module and a contact portion 3.

Note that if the IC card 1 is a non-contact type IC card, the IC module 10 is provided with an antenna part and an IC chip 100 in the IC module.

The IC card 1 is formed by implementing the IC module 10 on a card base substrate PT (an example of a card main body) made of plastic, for example. Accordingly, the IC card 1 is provided with the IC module 10 and the card base substrate PT in which the IC module 10 is embedded. Also, the IC card 1 can communicate with an external apparatus 2 via the contact portion 3.

For example, the IC card 1 receives, via the contact portion 3, a command (processing request) transmitted by the external apparatus 2, and executes processing (command processing) that is based on the received command. The IC card 1 then transmits a response (processing response), which is a result of executing the command processing, to the external apparatus 2 via the contact portion 3.

Here, the external apparatus 2 is an apparatus that communicates with the IC card 1, and is a terminal apparatus that includes a reader/writer device, for example.

The IC module 10 is provided with the contact portion 3 and the IC chip 100, and, for example, and is a module traded in a form such as a COT (Chip On Tape) in which a plurality of IC modules 10 are arranged on a tape. Note that there are cases where a single IC module 10 separated from a tape by single chip punching is called a COT.

The contact portion 3 has terminals for various signals necessary for the IC card 1 to operate. Here, the terminals for various signals include terminals for receiving power supply voltages, clock signals, reset signals and the like from the external apparatus 2, and a serial data input/output terminal (SIO terminal) for communicating with the external apparatus 2.

The IC chip 100 is an LSI (Large Scale Integration) chip such as a one-chip microprocessor.

Next, the hardware configuration of the IC card 1 of this embodiment will be described with reference to Fig. 2.

Fig. 2 is a diagram showing an example of the hardware configuration of the IC card 1 of this embodiment.

As shown in Fig. 2, the IC card 1 is provided with the IC module 10 that includes the contact portion 3 and the IC chip 100. The IC chip 100 is provided with a UART (Universal Asynchronous Receiver Transmitter) 4, a CPU (Central Processing Unit) 5, a ROM (Read Only Memory) 6, a RAM (Random Access Memory) 7 and an EEPROM (Electrically Erasable Programmable ROM) 8. In addition, each of the constituent elements 4 to 8 is connected via an internal bus BS1.

The UART 4 is a transceiver, and performs serial data communication with the external apparatus 2 via the above-described SIO terminal. The UART 4 converts serial data signals received via the SIO terminal into parallel data signals, and outputs the converted parallel data (e.g., one byte data) to the internal bus BS1. Also, the UART 4 converts parallel data acquired via the internal bus BS1 into serial data, and outputs the serial data to the external apparatus 2 via the SIO terminal. For example, the UART 4 receives commands from the external apparatus 2 via the SIO terminal. Also, the UART 4 transmits responses to the external apparatus 2 via the SIO terminal.

The CPU 5 is a processor, and executes programs stored in the ROM 6 or the EEPROM 8 so as to perform various types of processing of the IC card 1. For example, the CPU 5 executes command processing that is based on a command received by the UART 4 via the contact portion 3.

For example, the ROM 6 is a non-volatile memory such as a mask ROM, and stores programs for executing various types of processing of the IC card 1, and data such as command tables.

The EEPROM 8 is an electrically rewritable non-volatile memory, for example. The EEPROM 8 stores various types of data used by the IC card 1. For example, the EEPROM 8 stores information used for various services (applications) that use the IC card 1.

For example, the RAM 7 is a volatile memory such as a SRAM (Static RAM), and temporarily stores data used when performing various types of processing of the IC card 1.

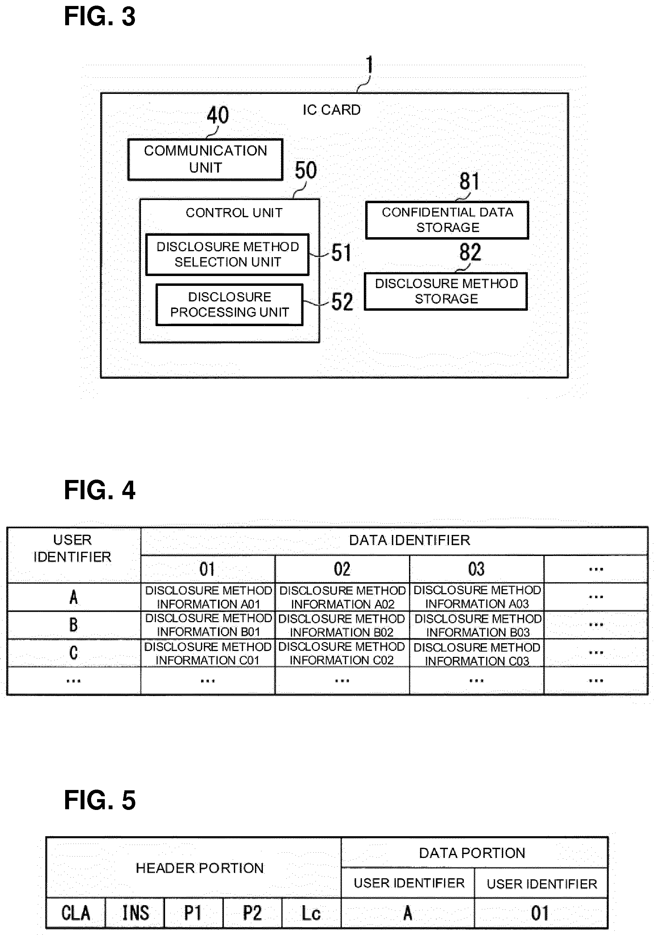

Next, an example of the functional configuration of the IC card 1 according to this embodiment will be described with reference to Fig. 3.

Fig. 3 is a block diagram showing an example of the functional configuration of the IC card 1 of this embodiment.

As shown in Fig. 3, the IC card 1 is provided with a communication unit 40, a control unit 50, a confidential data storage 81 and a disclosure method storage 82.

Here, each of the constituent elements of the IC card 1 shown in Fig. 3 is realized by using the hardware of the IC card 1 shown in Fig. 2.

For example, the communication unit 40 is realized by the UART 4, the CPU 5 and programs stored in the ROM 6. For example, the communication unit 40 transmits/receives commands and responses to/from the external apparatus 2 via the contact portion 3. Specifically, the communication unit 40 receives a command for requesting predetermined processing (processing request) from the external apparatus 2, and transmits, to the external apparatus 2, a response (processing response) to the command.

For example, the confidential data storage 81 is a storage constituted by the EEPROM 8. The confidential data storage 81 stores confidential data. The confidential data includes, for example, personal information such as the nationality, the address, the name, the gender, the date, month and year of birth, the age and the telephone number of the card owner (card holder). For example, the confidential data storage 81 stores a plurality of pieces of confidential data, and a data identifier (an example of data identification information) for identifying confidential data is given to each piece of confidential data. For example, the confidential data storage 81 stores data identifiers and confidential data in association with each other.

For example, the disclosure method storage 82 is a storage constituted by the EEPROM 8 or the ROM 6. The disclosure method storage 82 stores disclosure method information that indicates a data disclosure method for transmitting the above-described confidential data to the external apparatus 2. A data example stored in the disclosure method storage 82 will be described with reference to Fig. 4.

Fig. 4 is a diagram showing a data example in the disclosure method storage 82 of this embodiment.

As shown in Fig. 4, the disclosure method storage 82 stores "user identifiers" and disclosure method information corresponding to "data identifiers" in association with each other.

Here, a "user identifier" is user identification information for identifying the user of the IC card 1. For example, the "user identifier" may be a user name, a user identification code or the like. Note that, for example, users may include companies, governmental agencies, organizations and the like that provide a service that uses the IC card 1, in addition to a card owner and persons related to the card owner (e.g., family members).

A "data identifier" is data identification information for identifying confidential data. For example, the "data identifier" may be identification data for confidential data, a DGI (Data Grouping Identifier) corresponding to confidential data, a file ID indicating an EF (Elementary File) that stores confidential data or the like.

The disclosure method storage 82 stores a disclosure method table that includes a plurality of pairs of a "user identifier" and disclosure method information corresponding to a "data identifier". Note that in this embodiment, the disclosure method table is assumed to be stored in the disclosure method storage 82 in advance.

For example, disclosure method information is information indicating a portion to be disclosed out of confidential data, or information indicating a portion to be masked (hidden) out of confidential data. For example, disclosure method information may be information indicating the start position and the data length of a portion to be disclosed out of confidential data, or may be information indicating a data item be disclosed out of confidential data. For example, if confidential data represents an address, then a prefecture (or state), a municipality etc. correspond to a data item, and if confidential data represents a date, month and year of birth, then a year of birth, a month of birth etc. correspond to a data item. In other words, for example, disclosure method information may be information indicating a disclosure method for disclosing the data item of "prefecture" (or "state") out of the address and masking the other data items, information indicating a disclosure method for disclosing the data item of year of birth out of the date, month and year of birth and masking the other data items, or the like.

For example, if confidential data is in a TLV (Tag Length Value) format, is thus divided into data items and is stored in the confidential data storage 81, disclosure method information may be information indicating tags to be disclosed (or masked) out of the confidential data, for example. Accordingly, disclosure method information is parameter information for confidential data disclosure processing (mask processing) performed by a disclosure processing unit 52, which will be described later.

For example, the example shown in Fig. 4 indicates that disclosure method information that corresponds to a "user identifier" of "A" and a "data identifier" of "01" is "disclosure method information A01". The example also indicates, for example, that disclosure method information that corresponds to the "user identifier" of "A" and a "data identifier" of "02" is "disclosure method information A02". Here, as described above, the "disclosure method information A01" and the "disclosure method information A02" are information indicating a portion to be disclosed out of confidential data, or a portion to be masked (hidden) out of confidential data.

Returning to Fig. 3, for example, the control unit 50 is realized by the CPU 5, the RAM 7 and the ROM 6 or the EEPROM 8, and performs the entire control of the IC card 1. For example, the control unit 50 executes processing for various commands (command processing) in accordance with commands (processing requests) transmitted from the external apparatus 2 to the IC card 1. For example, the control unit 50 executes processing for a data disclosure request command. For example, the control unit 50 generates output data in which at least a portion of confidential data stored in the confidential data storage 81 is hidden (masked), and transmits the output data to the external apparatus 2, as the processing for a data disclosure request command.

Fig. 5 is a diagram showing an example of a data format of a data disclosure request command of this embodiment. The APDU (Application Protocol Data Unit) format of the command message of a data disclosure request command includes a header portion and a data portion. The header portion of the data disclosure request command includes "CLA" (class byte), "INS" (instruction byte), "P1" (parameter 1), "P2" (parameter 2) and "Lc" (data length). The data portion of the data disclosure request command includes a "user identifier" and a "data identifier". Fig. 5 shows a data disclosure request command in which a "user identifier" is "A" and a "data identifier" is "01".

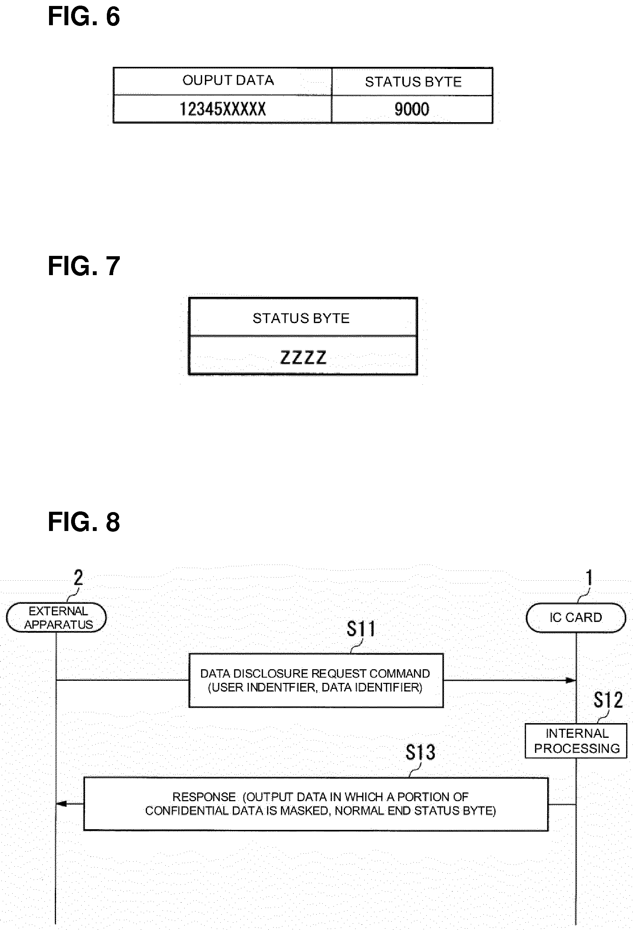

Moreover, if a data disclosure request command was normally executed, the control unit 50 transmits a normal response as shown in Fig. 6 to the external apparatus 2 via the communication unit 40. Also, if a data disclosure request command could not be normally executed, the control unit 50 transmits an abnormal response as shown in Fig. 7 to the external apparatus 2 via the communication unit 40.

Fig. 6 is a diagram showing an example of a normal response to a data disclosure request command according to this embodiment. If a data disclosure request command was normally executed, the control unit 50 transmits a response including output data (e.g., "12345XXXXX") and a status byte indicating a normal end (e.g., "9000") as shown in Fig. 6 to the external apparatus 2 via the communication unit 40. Note that in the example shown in Fig. 6, confidential data is "1234567890", for example, and output data is generated such that "12345" is disclosed and "67890" is masked by "Xs". In addition, in the following description, a status byte indicating a normal end is referred to as "normal end status byte".

In addition, Fig. 7 is a diagram showing an example of an abnormal response to a data disclosure request command according to this embodiment. If a data disclosure request command could not be normally executed, the control unit 50 transmits a response including a status byte indicating an abnormal end (e.g., "zzzz"), as shown in Fig. 7, to the external apparatus 2 via the communication unit 40.

Returning to the description with reference to Fig. 3, the control unit 50 is provided with a disclosure method selection unit 51 and the disclosure processing unit 52.

The disclosure method selection unit 51 selects a data disclosure method for disclosing confidential data stored in the confidential data storage 81, based on a user identifier received from the external apparatus 2 via the communication unit 40. For example, the disclosure method selection unit 51 acquires disclosure method information corresponding to the user identifier from the disclosure method table in the disclosure method storage 82. Specifically, the disclosure method selection unit 51 acquires, from the disclosure method table in the disclosure method storage 82, disclosure method information corresponding to the user identifier and data identifier included in the data disclosure request command, and outputs the disclosure method information to the disclosure processing unit 52. Note that if the disclosure method information corresponding to the user identifier and data identifier included in the data disclosure request command is not present in the disclosure method table, the disclosure method selection unit 51 outputs, to the disclosure processing unit 52, information indicating that corresponded disclosure method information is not present.

The disclosure processing unit 52 generates output data in which at least a portion of confidential data is hidden (masked) in accordance with the data disclosure method that is based on the disclosure method information selected by the disclosure method selection unit 51, and transmits the output data to the external apparatus 2. Specifically, regarding confidential data common to a plurality of users, the disclosure processing unit 52 generates output data in which portions that are different depending on the users are disclosed, based on the data disclosure method indicated by the disclosure method information selected by the disclosure method selection unit 51, and transmits the output data to the external apparatus 2 via the communication unit 40. For example, the disclosure processing unit 52 generates output data in which at least a portion of confidential data corresponding to a data identifier is hidden in accordance with the disclosure method information acquired by the disclosure method selection unit 51, and transmits the output data to the external apparatus 2.

For example, the disclosure processing unit 52 acquires, from the confidential data storage 81, confidential data corresponding to the data identifier included in a data disclosure request command. The disclosure processing unit 52 masks at least a portion of the acquired confidential data using disclosure method information acquired by the disclosure method selection unit 51, and generates output data. Here, the disclosure processing unit 52 may mask a portion to be masked (a portion to be hidden) indicated by the disclosure method information using predetermined data (fixed data), or using random data such as random numbers. For example, the disclosure processing unit 52 transmits a response including a normal end status byte and the output data generated such that at least a portion of the confidential data is masked as shown in Fig. 6, to the external apparatus 2 via the communication unit 40. Also, if the user identifier included in the data disclosure request command is not present in the disclosure method table, the disclosure processing unit 52 transmits a response including an error status byte (status byte indicating an abnormal end) as shown in Fig. 7 to the external apparatus 2 via the communication unit 40.

Next, the operations of the IC card 1 of this embodiment will be described with reference to drawings.

Fig. 8 is a diagram showing an example of the operation of a data disclosure request command in this embodiment. Note that Fig. 8 shows a case where the data disclosure request command has been normally executed.

As shown in Fig. 8, first, the external apparatus 2 transmits a data disclosure request command to the IC card 1 (step S11). Specifically, the external apparatus 2 transmits a data disclosure request command including a user identifier and a data identifier as shown in Fig. 5. Accordingly, the control unit 50 of the IC card 1 receives the data disclosure request command via the communication unit 40.

Next, the IC card 1 executes internal processing for the data disclosure request command (step S12). Specifically, the disclosure method selection unit 51 of the control unit 50 acquires disclosure method information corresponding to the user identifier and the data identifier from the disclosure method table in the disclosure method storage 82, and outputs the disclosure method information to the disclosure processing unit 52. The disclosure processing unit 52 then acquires confidential data corresponding to the data identifier from the confidential data storage 81, and generates output data in which a portion of the acquired confidential data is masked in accordance with the disclosure method information acquired by the disclosure method selection unit 51.

Next, the IC card 1 transmits, to the external apparatus 2, a response to the data disclosure request command (step S13). Specifically, the disclosure processing unit 52 transmits a response including a normal end status byte and the output data generated in which a portion of the confidential data is masked, to the external apparatus 2 via the communication unit 40.

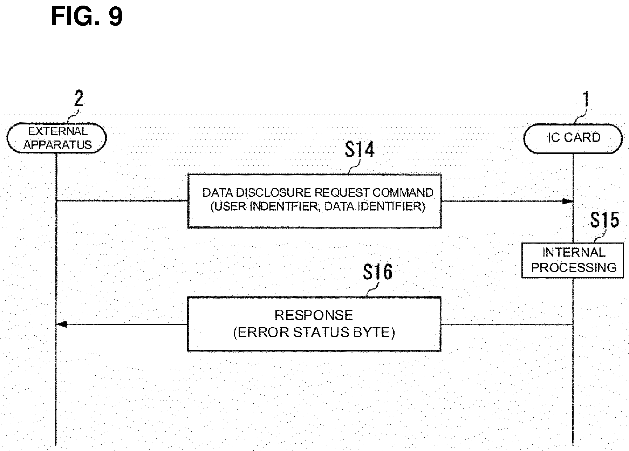

Fig. 9 is a diagram showing another example of the operation of a data disclosure request command in this embodiment. Note that Fig. 9 shows a case where a data disclosure request command has not been normally executed (the user identifier is not present in the disclosure method table).

As shown in Fig. 9, first, the external apparatus 2 transmits the data disclosure request command to the IC card 1 (step S14). This processing is the same as the above-described processing of step S11 shown in Fig. 8.

Next, the IC card 1 executes internal processing for the data disclosure request command (step S15). Here, the disclosure method selection unit 51 of the control unit 50 searches the disclosure method table in the disclosure method storage 82 for disclosure method information corresponding to the user identifier and the data identifier. However, the user identifier is not present in the disclosure method table, and thus the disclosure method selection unit 51 outputs, to the disclosure processing unit 52, information indicating that disclosure method information corresponding to the user identifier and the data identifier is not present. The disclosure processing unit 52 generates a response including an error status byte.

Next, the IC card 1 transmits, to the external apparatus 2, a response to the data disclosure request command (step S16). Specifically, the disclosure processing unit 52 transmits a response including an error status byte to the external apparatus 2 via the communication unit 40.

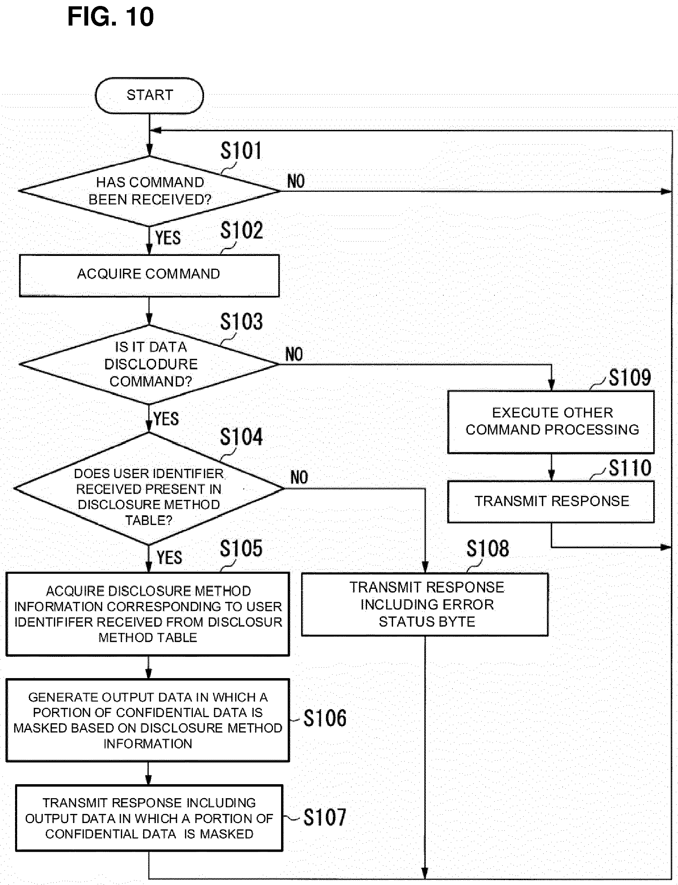

Next, processing for a data disclosure request command in the IC card 1 will be described with reference to Fig. 10.

Fig. 10 is a flowchart showing an example of the operation of a data disclosure request command of this embodiment.

As shown in Fig. 10, first, the control unit 50 of the IC card 1 determines whether or not a command has been received (step S101). Specifically, the control unit 50 determines whether or not a command has been received by the communication unit 40. If a command has been received (step S101: YES), the control unit 50 advances the procedure to step S102. If a command has not been received (step S101: NO), the control unit 50 returns the procedure to step S101.

In step S102, the control unit 50 acquires the command. Specifically, the control unit 50 acquires a command message received by the communication unit 40.

Next, the control unit 50 determines whether or not the received command is a data disclosure request command (step S103). If the received command is a data disclosure request command (step S103: YES), the control unit 50 advances the procedure to step S104. If the received command is not a data disclosure request command (step S103: NO), the control unit 50 advances the procedure to step S109.

In step S104, the disclosure method selection unit 51 of the control unit 50 determines whether or not the received user identifier is present in the disclosure method table in the disclosure method storage 82. The disclosure method selection unit 51 determines whether or not disclosure method information corresponding to the user identifier and the data identifier included in the received data disclosure request command is present in the disclosure method table, for example. If the received user identifier (disclosure method information) is present in the disclosure method table (step S104: YES), the disclosure method selection unit 51 advances the procedure to step S105. If the received user identifier is not present in the disclosure method table (step S104: NO), the disclosure method selection unit 51 advances the procedure to step S108.

In step S105, the disclosure method selection unit 51 acquires the disclosure method information corresponding to the user identifier received from the disclosure method table. Specifically, the disclosure method selection unit 51 acquires, from the disclosure method table in the disclosure method storage 82, the disclosure method information corresponding to the user identifier and the data identifier included in the received data disclosure request command.

Next, the disclosure processing unit 52 of the control unit 50 masks a portion of confidential data in accordance with the disclosure method information acquired by the disclosure method selection unit 51 (step S106). Specifically, the disclosure processing unit 52 acquires, from the confidential data storage 81, confidential data corresponding to the data identifier included in the received data disclosure request command. The disclosure processing unit 52 then masks a portion of the acquired confidential data, in accordance with the disclosure method information acquired by the disclosure method selection unit 51, and generates output data.

Next, the disclosure processing unit 52 transmits, to the external apparatus 2, a response including the output data generated in which a portion of the confidential data is masked (step S107). Specifically, for example, the disclosure processing unit 52 transmits a response including a normal end status byte and the output data generated in which a portion of the confidential data is masked as shown in Fig. 6, to the external apparatus 2 via the communication unit 40. After the processing of step S107, the disclosure processing unit 52 returns the procedure to step S101.

In step S108, the disclosure processing unit 52 transmits a response including an error status byte to the external apparatus 2. Specifically, if the user identifier received from the external apparatus 2 is not stored in the disclosure method storage 82, the disclosure processing unit 52 transmits state information indicating that the confidential data cannot be disclosed (an error status byte) as shown in Fig. 7, to the external apparatus 2 via the communication unit 40. After the processing of step S108, the disclosure processing unit 52 returns the procedure to step S101.

In step S109, the control unit 50 executes other command processing (processing for a command other than a data disclosure request command).

Next, the control unit 50 transmits a response to the external apparatus 2 (step S110). Specifically, the control unit 50 transmits a response including a result of executing other command processing to the external apparatus 2 via the communication unit 40. After the processing of step S110, the control unit 50 returns the procedure to step S101.

As described above, the IC card 1 (a portable electronic device) according to this embodiments is provided with the confidential data storage 81, the disclosure method selection unit 51 and the disclosure processing unit 52. The confidential data storage 81 stores confidential data. The disclosure method selection unit 51 selects disclosure method information indicating a data disclosure method for disclosing the confidential data stored in the confidential data storage 81 based on a user identifier (user identification information) for identifying a user that has been received from the external apparatus 2. The disclosure processing unit 52 generates output data in which at least a portion of the confidential data is hidden (masked) in accordance with the data disclosure method that is based on the disclosure method information selected by the disclosure method selection unit 51, and transmits the output data to the external apparatus 2. Specifically, the disclosure processing unit 52 generates the output data in which portions that are different depending on the user, out of the confidential data common to the users, are disclosed based on the data disclosure method indicated by the disclosure method information selected by the disclosure method selection unit 51, and transmits the output data.

This makes it possible for the IC card 1 according to this embodiment to change a portion to be disclosed of confidential data depending on the user. Specifically, the IC card 1 according to this embodiment can be used when a portion to be disclosed of the same confidential data needs to be changed depending on the user, for example. Therefore, the IC card 1 according to this embodiment can improve the convenience.

Application examples of this embodiment will be described below. For example, if a specific company desires to acquire a prefecture (or state) out of an address that is confidential data, a user identifier indicating the specific company and disclosure method information for disclosing a data item of prefecture (or state) and masking the other data items are stored in association with each other in the disclosure method storage 82 in advance. By receiving the user identifier indicating the specific company, the IC card 1 can transmit, to the external apparatus 2, output data generated such that the data item of prefecture (or state) out of the address is disclosed and the other data items are masked. Moreover, for example, if a liquor shop, a cigarette shop or the like wants to acquire the age of a card owner, or if a specific company desires to acquire the gender of a card owner, the IC card 1 according to this embodiment can perform processing similar to that in the case where an address is desired to be acquired.

The IC card 1 according to this embodiment generates output data in which portions that are different depending on the user, out of confidential data common to a plurality of users, are disclosed, and transmits the output data, and thus confidential data stored in the same area can be output in various formats. Therefore, the IC card 1 according to this embodiment does not need to have confidential data in various formats stored in the confidential data storage 81 in order to output the confidential data in various formats depending on the user. Therefore, the IC card 1 according to this embodiment makes it possible to reduce the storage capacity of the confidential data storage 81, compared to a case where confidential data in various formats is stored in the confidential data storage 81.

The IC card 1 according to this embodiment is provided with the disclosure method storage 82 that stores user identifiers and disclosure method information indicating data disclosure methods in association with each other. The disclosure method selection unit 51 acquires disclosure method information corresponding to a user identifier from the disclosure method storage 82. The disclosure processing unit 52 then generates output data in which at least a portion of confidential data is hidden in accordance with the disclosure method information acquired by the disclosure method selection unit 51, and transmits the output data to the external apparatus 2.

Accordingly, the IC card 1 according to this embodiment can change a portion to be disclosed out of confidential data, depending on the user by simply including the disclosure method storage 82.

In this embodiment, disclosure method information includes information indicating a portion to be disclosed of confidential data, or information indicating a portion to be hidden of confidential data. Specifically, the disclosure method storage 82 stores disclosure method information. The disclosure method information includes information indicating a portion to be disclosed of confidential data, or information indicating a portion to be hidden of confidential data.

Accordingly, the IC card 1 according to this embodiment can generate output data in which a predetermined portion of confidential data is appropriately disclosed or hidden depending on the user, and to transmit the output data to the external apparatus 2.

In this embodiment, disclosure method information includes information indicating those data items of the confidential data that are to be disclosed or information indicating those data items of the confidential data that are to be hidden. Specifically, the disclosure method storage 82 stores disclosure method information including information indicating those data items of the confidential data that are to be disclosed or information indicating those data items of the confidential data that are to be hidden.

Accordingly, the IC card 1 according to this embodiment can generate output data in which confidential data is to be appropriately disclosed or hidden in units of data items depending on the user, and to transmit the output data to the external apparatus 2.

In addition, in this embodiment, if a user identifier received from the external apparatus 2 is not stored in the disclosure method storage 82, the disclosure processing unit 52 transmits state information indicating that confidential data cannot be disclosed (e.g., an error status byte) to the external apparatus 2.

Accordingly, the IC card 1 according to this embodiment can clearly notify a user to which the confidential data cannot be disclosed that the confidential data cannot be disclosed.

Note that in this embodiment described above, an example was described in which the disclosure processing unit 52 hides only a portion of confidential data based on disclosure method information, but there may be a case in which entire confidential data is hidden based on disclosure method information.

Moreover, in this embodiment described above, an example was described in which the disclosure method information is parameter information for performing confidential data disclosure processing (mask processing), but the disclosure method information may also be selection data for selecting one method from among several predetermined disclosure methods.

### Second Embodiment

Next, an IC card 1a of a second embodiment will be described with reference to drawings. In this embodiment, if a received user identifier is not stored in a disclosure information storage, the IC card 1a generates output data in which entire confidential data is hidden, and outputs the output data.

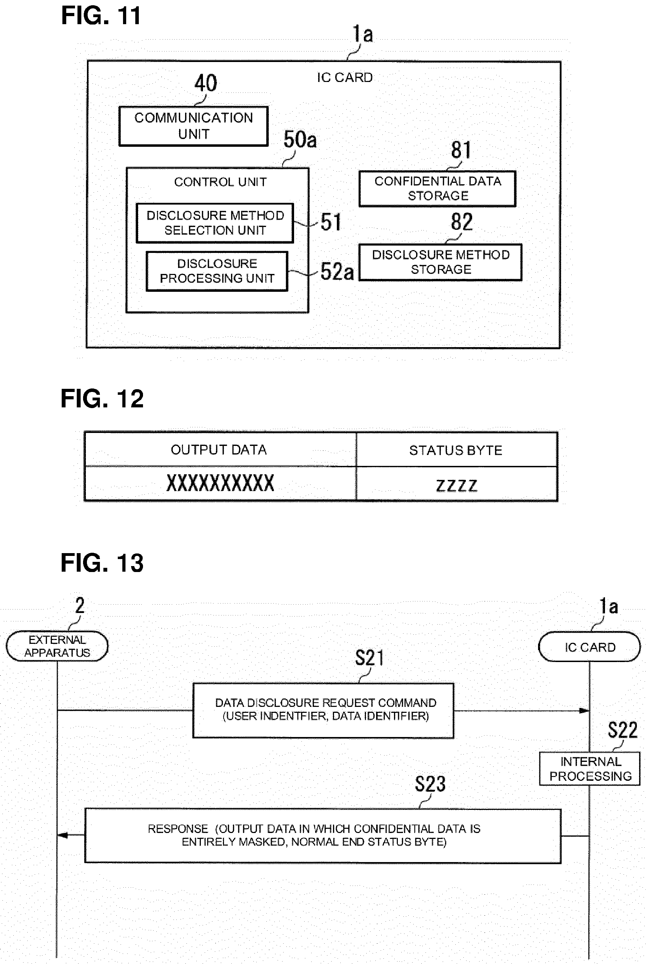

Fig. 11 is a block diagram showing an example of the functional configuration of the IC card 1a of this embodiment.

Note that the external view and the hardware configuration of the IC card 1a of this embodiment are similar to those in the first embodiment shown in Figs. 1 and 2, and thus their description is omitted. Moreover, in Fig. 11, the same reference signs are given to the same constituent elements as those shown in Fig. 3, and their description is omitted.

As shown in Fig. 11, the IC card 1a is provided with a communication unit 40, a control unit 50a, a confidential data storage 81 and a disclosure method storage 82. Also, the control unit 50a is provided with a disclosure method selection unit 51 and a disclosure processing unit 52a.

In this embodiment, the processing of the disclosure processing unit 52a of the control unit 50a is different from the first embodiment.

For example, the control unit 50a is realized by the CPU 5, the RAM 7 and the ROM 6 or the EEPROM 8, and performs the entire control of the IC card 1a. The control unit 50a is similar to the control unit 50 of the first embodiment except that the control unit 50a is provided with the disclosure processing unit 52a.

If the user identifier included in a data disclosure request command is not present in the disclosure method table, the disclosure processing unit 52a transmits a response including output data and an error status byte as shown in Fig. 12.

Fig. 12 is a diagram showing an example of an abnormal response to a data disclosure request command according to this embodiment. If a data disclosure request command could not be normally executed, the disclosure processing unit 52a of the control unit 50a transmits a response including an error status byte (e.g., "zzzz") and output data generated such that entire confidential data is masked (e.g., "XXXXXXXXXX") as shown in Fig. 12, to the external apparatus 2 via the communication unit 40.

Note that the other processing of the disclosure processing unit 52a is similar to that of the disclosure processing unit 52 of the first embodiment.

Next, the operations of the IC card 1a of this embodiment will be described with reference to drawings.

Fig. 13 is a diagram showing an example of the operation of a data disclosure request command in this embodiment. Note that Fig. 13 shows an example of the case in which a data disclosure request command has not been normally executed (a user identifier is not present in the disclosure method table). Also, in this embodiment, the operation in the case where a data disclosure request command has been normally executed is similar to that in the first embodiment shown in Fig. 8, and thus its description is omitted here.

As shown in Fig. 13, first, the external apparatus 2 transmits a data disclosure request command to the IC card 1a (step S21). This processing is similar to the above-described processing of step S14 shown in Fig. 9.

Next, the IC card 1a executes internal processing for the data disclosure request command (step S22). Here, the disclosure method selection unit 51 of the control unit 50a searches the disclosure method table in the disclosure method storage 82 for disclosure method information corresponding to the user identifier and the data identifier. The user identifier is not present in the disclosure method table, and thus the disclosure method selection unit 51 outputs, to the disclosure processing unit 52a, information indicating that disclosure method information corresponding to the user identifier and the data identifier is not present. The disclosure processing unit 52a generates a response including an error status byte and output data generated such that entire confidential data is masked.

Next, the IC card 1a transmits, to the external apparatus 2, the response to the data disclosure request command (step S23). Specifically, the disclosure processing unit 52a transmits the response including an error status byte and the output the data generated such that the entire confidential data is masked, to the external apparatus 2 via the communication unit 40.

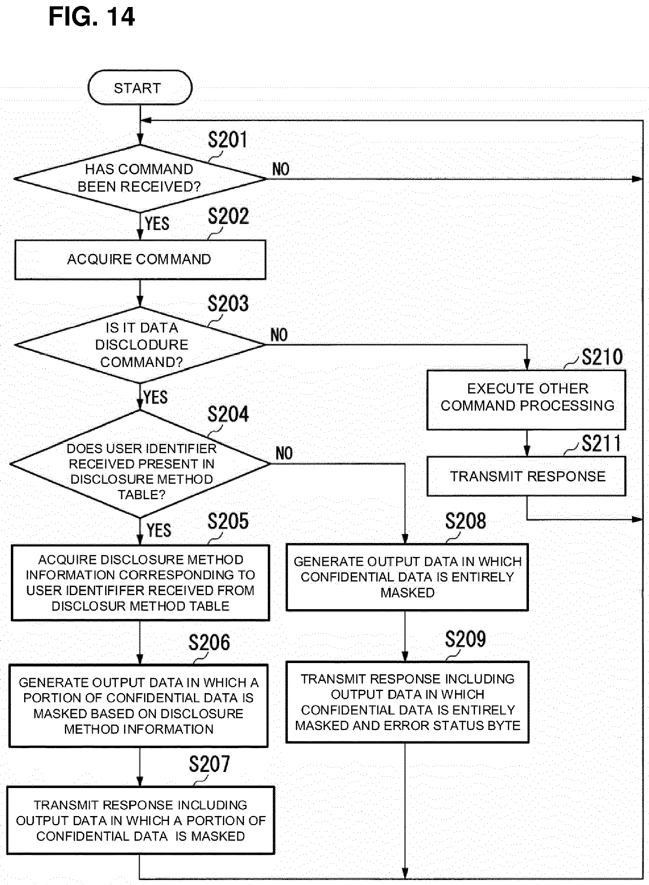

Next, the processing for a data disclosure request command in the IC card 1a will be described with reference to Fig. 14. Fig. 14 is a flowchart showing an example of the operation of a data disclosure request command of this embodiment. As shown in Fig. 14, first, the control unit 50a of the IC card 1a determines whether or not a command has been received (step S201). Note that the processing of steps S201 to S207 is similar to the processing of steps S101 to S107 shown in Fig. 10, and thus its description is omitted here.

In step S208, the disclosure processing unit 52a masks entire confidential data and generates output data. For example, the disclosure processing unit 52a acquires, from the confidential data storage 81, confidential data corresponding to the data identifier included in the received data disclosure request command. The disclosure processing unit 52a then masks the entirety of the acquired confidential data as shown in Fig. 12, and generates output data.

Next, the disclosure processing unit 52a transmits, to the external apparatus 2, a response including an error status byte and the output data generated such that the entire confidential data is masked (step S209). Specifically, if the user identifier received from the external apparatus 2 is not stored in the disclosure method storage 82, the disclosure processing unit 52a transmits a response as shown in Fig. 12 to the external apparatus 2 via the communication unit 40. After the processing of step S209, the disclosure processing unit 52a returns the procedure to step S101.

The processing of steps S210 and S211 is similar to the processing of steps S109 and S110 shown in Fig. 10, and thus its description is omitted here.

As described above, in the IC card 1a according to this embodiment, if the user identifier received from the external apparatus 2 is not stored in the disclosure method storage 82, the disclosure processing unit 52a transmits, to the external apparatus 2, output data generated such that the entire confidential data is hidden (masked).

Accordingly, the IC card 1a according to this embodiment can clearly notify a user to which confidential data cannot be disclosed that the confidential data cannot be disclosed. In addition, the IC card 1a according to this embodiment can set the data length of a response in the case where confidential data is not to be disclosed to the same as the data length of a response in the case where a portion of the confidential data is to be disclosed. Therefore, the IC card 1a according to this embodiment can communalize response data processing in the external apparatus 2, for example. Accordingly, the IC card 1a according to this embodiment can simplify response data processing in the external apparatus 2, compared to the first embodiment.

In the embodiment above, an example was described in which the entire confidential data is hidden (masked) if a received user identifier is not stored in the disclosure method storage 82, but a configuration may be adopted in which a predetermined data item is disclosed. Specifically, a configuration may be adopted in which, if a user identifier received from the external apparatus 2 is not stored in the disclosure method storage 82, the disclosure processing unit 52a generates output data in which a predetermined data item out of the confidential data is disclosed and data items other than the predetermined data item are hidden, and transmits the output data to the external apparatus 2.

Accordingly, the IC card 1a according to this embodiment can appropriately disclose a data item that can be disclosed independently of the user, out of the confidential data. For example, in the case of a configuration in which nationality and country information is disclosed independently of the user, when a lost IC card 1a is found, it is possible to know the nationality and country information, and to deliver the IC card 1a as a lost article e.g. to the embassy of the country to which the owner of the found IC card 1a belongs to.

### Third Embodiment

Next, an IC card 1b of the third embodiment will be described with reference to drawings. In this embodiment, the IC card 1b can register disclosure method information received from an external apparatus.

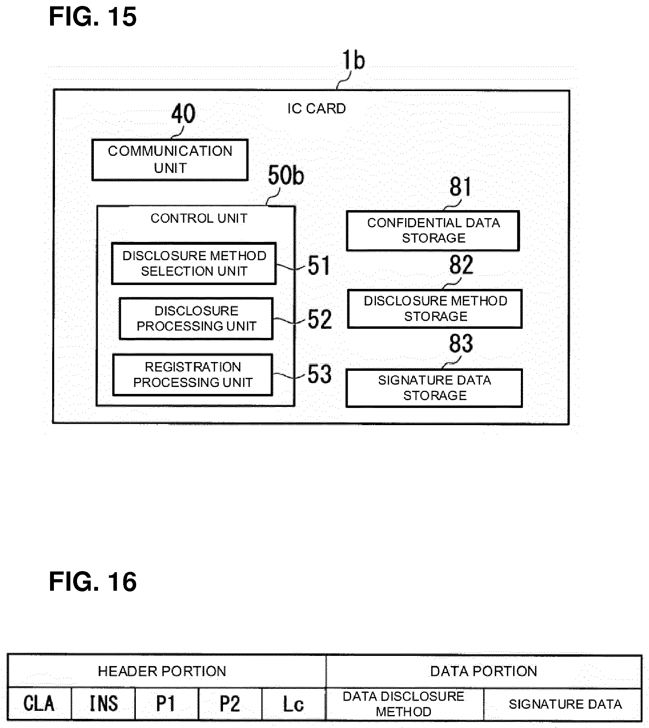

Fig. 15 is a block diagram showing an example of the functional configuration of the IC card 1b of this embodiment.

Note that the external view and the hardware configuration of the IC card 1b of this embodiment are similar to those in the first embodiment shown in Figs. 1 and 2, and thus their description is omitted. Moreover, in Fig. 15, the same reference signs are given to the same constituent elements as those shown in Fig. 3, and their description is omitted.

As shown in Fig. 15, the IC card 1b is provided with a communication unit 40, a control unit 50b, a confidential data storage 81, a disclosure method storage 82 and a signature data storage 83. Also, the control unit 50b is provided with a disclosure method selection unit 51, a disclosure processing unit 52 and a registration processing unit 53.

This embodiment is different from the first embodiment in that the IC card 1b is provided with the signature data storage 83 and the registration processing unit 53 so as to check the validity of received signature data, and then register disclosure method information in the disclosure method storage 82.

For example, the signature data storage 83 is a storage constituted by the EEPROM 8 or the RAM 7. The signature data storage 83 stores signature data in advance. Note that the signature data may be data generated out of the IC card 1b, or may be data generated in the IC card 1b.

For example, the control unit 50b is realized by the CPU 5, the RAM 7, and the ROM 6 or the EEPROM 8, and performs the entire control of the IC card 1b. The control unit 50b is similar to the control unit 50 of the first embodiment, except that the control unit 50b is provided with the registration processing unit 53.

Note that in this embodiment, the disclosure method storage 82 is assumed to be constituted by the EEPROM 8.

The registration processing unit 53 executes processing for a data disclosure method registration command for registering disclosure method information in the disclosure method storage 82. Specifically, the registration processing unit 53 stores user identifiers and disclosure method information in association with each other in the disclosure method storage 82, in accordance with a data disclosure method registration command (an example of a registration request) received from the external apparatus 2. Note that when the validity of signature data included in the data disclosure method registration command is confirmed (guaranteed), the registration processing unit 53 registers the disclosure method information in the disclosure method storage 82. Here, the data disclosure method registration command has a data format as shown in Fig. 16.

Fig. 16 is a diagram showing an example of a data format of a data disclosure method registration command of this embodiment. The APDU format of the command message of a data disclosure method registration command includes a header portion and a data portion. The data portion of a data disclosure method registration command includes a "data disclosure method" and "signature data". Here, the "data disclosure method" includes a user identifier, a data identifier, and disclosure method information and the like.

Next, the operations of the IC card 1b of this embodiment will be described with reference to drawings.

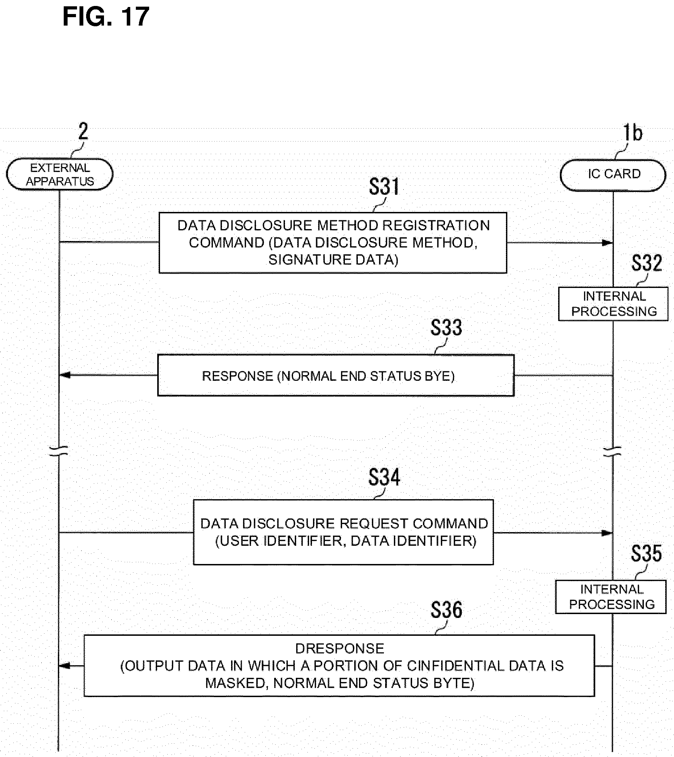

Fig. 17 is a diagram showing an example of the operation of a data disclosure method registration command in the IC card 1b of this embodiment. Note that Fig. 17 shows an example of the case in which a data disclosure method registration command has been normally executed (the validity of received signature data has been confirmed (guaranteed).

As shown in Fig. 17, first, the external apparatus 2 transmits a data disclosure method registration command to the IC card 1b (step S31). Specifically, the external apparatus 2 transmits a data disclosure method registration command including a data disclosure method and signature data as shown in Fig. 16. Accordingly, the control unit 50b of the IC card 1b receives the data disclosure method registration command via the communication unit 40.

Next, the IC card 1b executes internal processing for the data disclosure method registration command (step S32). Here, the registration processing unit 53 of the control unit 50b checks the validity of the received signature data. For example, the registration processing unit 53 compares the received signature data with signature data stored in the signature data storage 83, and if the two pieces of data match, determines that the received signature data is valid. If the validity of the received signature data is confirmed, the registration processing unit 53 registers disclosure method information indicating the received data disclosure method in the disclosure method storage 82. Specifically, the registration processing unit 53 adds disclosure method information indicating the received data disclosure method in the disclosure method table in the disclosure method storage 82. The registration processing unit 53 then generates a response including a normal end status byte.

Next, the IC card 1b transmits, to the external apparatus 2, the response to the data disclosure method registration command (step S33). Specifically, the registration processing unit 53 transmits the response including a normal end status byte to the external apparatus 2 via the communication unit 40.

After the IC card 1b of this embodiment registers the data disclosure method in the disclosure method storage 82 using the data disclosure method registration command in this manner, a data disclosure request command can be executed as shown in steps S34 to S36. Note that the processing of steps S34 to S36 is similar to the processing of steps S11 to S13 shown in Fig. 8, and thus its description is omitted here.

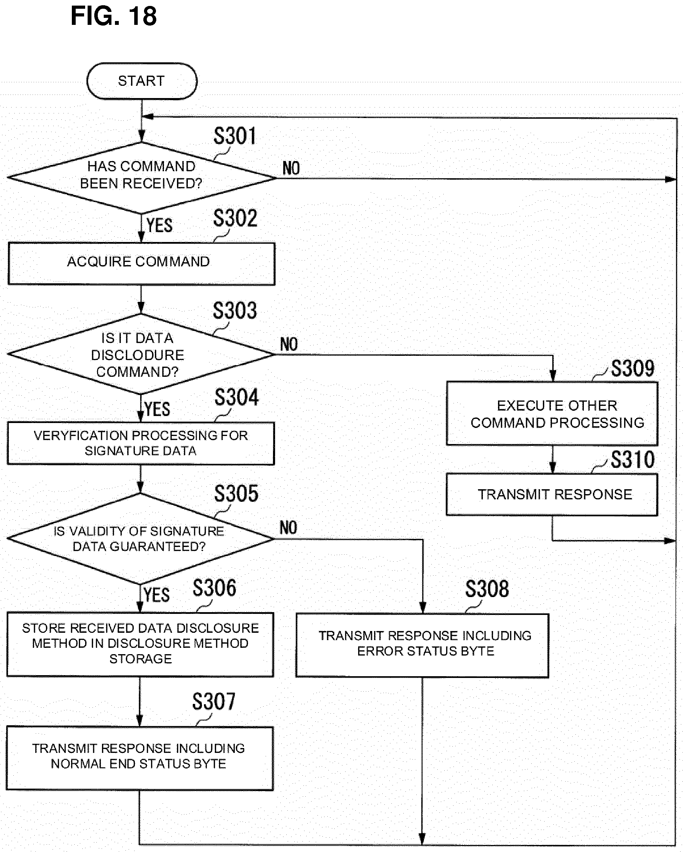

Next, processing for a data disclosure method registration command in the IC card 1b will be described with reference to Fig. 18.

Fig. 18 is a flowchart showing an example of the operation of a data disclosure method registration command of this embodiment.

As shown in Fig. 18, first, the control unit 50b of the IC card 1b determines whether or not a command has been received (step S301). If a command has been received (step S301: YES), the control unit 50b advances the procedure to step S302. If a command has not been received (step S301: NO), the control unit 50b returns the procedure to step S301.

In step S302, the control unit 50b acquires the command. Specifically, the control unit 50b acquires the command message received by the communication unit 40.

Next, the control unit 50b determines whether or not the received command is a data disclosure method registration command (step S303). If the received command is a data disclosure method registration command (step S303: YES), the control unit 50b advances the procedure to step S304. If the received command is not a data disclosure method registration command (step S303: NO), the control unit 50b advances the procedure to step S309.

In step S304, the registration processing unit 53 of the control unit 50b executes processing for verifying received signature data. Specifically, the registration processing unit 53 compares signature data included in the data disclosure method registration command with signature data stored in the signature data storage 83.

Next, the registration processing unit 53 determines whether or not the validity of the received signature data has been guaranteed (step S305). For example, if the signature data included in the data disclosure method registration command matches the signature data stored in the signature data storage 83, the registration processing unit 53 determines that the validity of the received signature data has been guaranteed. If the validity of the received signature data has been guaranteed (step S305: YES), the registration processing unit 53 advances the procedure to step S306. If the validity of the signature data has not been guaranteed (step S305: NO), the registration processing unit 53 advances the procedure to step S308.

In step S306, the registration processing unit 53 stores a received data disclosure method in the disclosure method storage 82. For example, the registration processing unit 53 stores a user identifier and a data identifier and disclosure method information in the disclosure method storage 82 in association with each other, as shown in Fig. 4.

Next, the registration processing unit 53 transmits a response including a normal end status byte to the external apparatus 2 (step S307). Specifically, the registration processing unit 53 transmits a response including a normal end status byte to the external apparatus 2 via the communication unit 40. After the processing of step S307, the registration processing unit 53 returns the procedure to step S301.

In step S308, the registration processing unit 53 transmits a response including an error status byte to the external apparatus 2. Specifically, the registration processing unit 53 transmits a response including an error status byte indicating that registration of the data disclosure method cannot be executed, to the external apparatus 2 via the communication unit 40. After the processing of step S308, the registration processing unit 53 returns the procedure to step S301.

In step S309, the control unit 50b executes other command processing (processing for a command other than a data disclosure method registration command).

Next, the control unit 50b transmits a response to the external apparatus 2 (step S310). Specifically, the control unit 50b transmits a response including a result of executing other command processing, to the external apparatus 2 via the communication unit 40. After the processing of step S310, the control unit 50b returns the procedure to step S301.

As described above, the IC card 1b according to this embodiment is provided with the registration processing unit 53 that stores user identifiers and disclosure method information in association with each other in the disclosure method storage 82 in accordance with a data disclosure method registration command (registration request) received from the external apparatus 2.

Accordingly, the IC card 1b according to this embodiment can set a data disclosure method that is different for each card by the registration processing unit 53 storing the data disclosure method in the disclosure method storage 82 at the time of issuance. It also becomes possible for the IC card 1b according to this embodiment to add and change a data disclosure method.

### Fourth Embodiment

Next, an IC card 1c of a fourth embodiment will be described with reference to drawings.

In this embodiment, an example of the case in which the IC card 1c changes a portion of disclosure of confidential data in accordance with a combination of a plurality of users will be described.

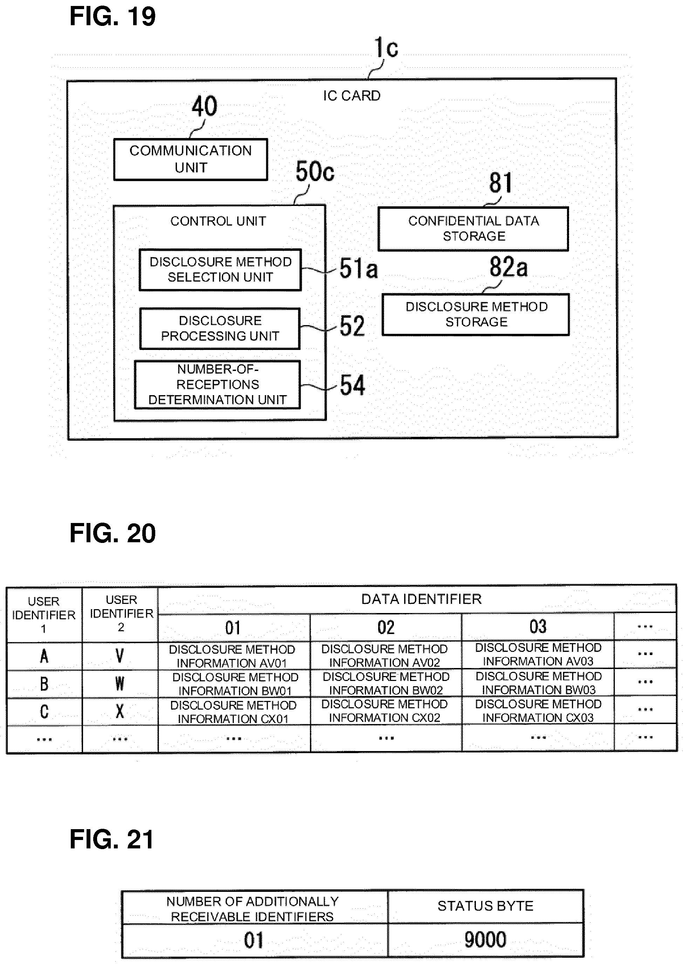

Fig. 19 is a block diagram showing an example of the functional configuration of the IC card 1c of this embodiment.

Note that the external view and the hardware configuration of the IC card 1 of this embodiment are similar to those in the first embodiment shown in Figs. 1 and 2, and thus their description is omitted. Moreover, in Fig. 19, the same reference signs are given to the same constituent elements as those shown in Fig. 3, and their description is omitted.

As shown in Fig. 19, the IC card 1c is provided with a communication unit 40, a control unit 50c, a confidential data storage 81 and a disclosure method storage 82a. Also, the control unit 50c is provided with a disclosure method selection unit 51a, a disclosure processing unit 52 and a number-of-receptions determination unit 54 (a unit 54 that determines the number of receptions).

This embodiment is different from the first embodiment in that the IC card 1c is provided with the disclosure method storage 82a and the disclosure method selection unit 51a that can handle a combination of a plurality of users, as well as the number-of-receptions determination unit 54, and changes a portion of disclosure of confidential data in accordance with a combination of a plurality of users.

As shown in Fig. 20, the disclosure method storage 82a stores a plurality of (e.g., two) user identifiers (e.g., a "user identifier 1" and a "user identifier 2") and disclosure method information corresponding to a "data identifier" in association with each other.

Fig. 20 is a diagram showing a data example in the disclosure method storage 82a of this embodiment.

The disclosure method storage 82a stores a disclosure method table that includes a plurality of pairs of combinations of the "user identifier 1" and the "user identifier 2" and disclosure method information corresponding to a "data identifier".

For example, the example shown in Fig. 20 indicates that the disclosure method information corresponding to a "data identifier" of "01" and a combination of a "user identifier 1" of "A" and a "user identifier 2" of "V" is "disclosure method information AV01". The example also indicates, for example, that the disclosure method information corresponding to a "data identifier" of "02" and a combination of a "user identifier 1" of "A" and a "user identifier 2" of "V" is "disclosure method information AV 02". Here, the "disclosure method information AV01" and the "disclosure method information AV02" are information indicating a portion to be disclosed or masked (hidden) out of confidential data.

For example, the control unit 50c is realized by the CPU 5, the RAM 7 and the ROM 6 or the EEPROM 8, and performs the entire control of the IC card 1c. The control unit 50c is similar to the control unit 50 of the first embodiment, except that the control unit 50c is provided with the disclosure method selection unit 51a in place of the disclosure method selection unit 51, and is provided with the number-of-receptions determination unit 54.

The disclosure method selection unit 51a selects a data disclosure method for disclosing confidential data stored in the confidential data storage 81 based on two user identifiers received from the external apparatus 2 via the communication unit 40. For example, the disclosure method selection unit 51a acquires, from the disclosure method table in the disclosure method storage 82a, disclosure method information corresponding to the two user identifiers. Specifically, the disclosure method selection unit 51a acquires, from the disclosure method table in the disclosure method storage 82a, disclosure method information corresponding to a data identifier and a combination of the "user identifier 1" and the "user identifier 2" received using a data disclosure request command, and outputs the disclosure method information to the disclosure processing unit 52. Note that if disclosure method information corresponding to the combination of the "user identifier 1" and the "user identifier 2" received using the data disclosure request command is not present in the disclosure method table, the disclosure method selection unit 51a outputs, to the disclosure processing unit 52, information indicating that disclosure method information corresponding to the combination of the "user identifier 1" and the "user identifier 2" is not present.

The number-of-receptions determination unit 54 determines the number of user identifiers received from the external apparatus 2 using the data disclosure request command. For example, the number-of-receptions determination unit 54 counts the number of user identifiers received from the external apparatus 2, and, for example, determines whether or not the number of received user identifiers reaches the number of user identifiers (e.g., "two") stored in association with the disclosure method information in the disclosure method storage 82a. For example, if the number of received user identifiers does not reach the number of user identifiers (e.g., "two") that are stored in association with disclosure method information in the disclosure method storage 82a, the number-of-receptions determination unit 54 transmits, to the external apparatus 2, number-of-receptions information indicating the number of additional receptions required to reach the number of user identifiers. In other words, if the number of received user identifiers does not reach "two", for example, the number-of-receptions determination unit 54 transmits a response including the number-of-receptions information and a normal status byte as shown in Fig. 21 to the external apparatus 2 via the communication unit 40.

Fig. 21 is a diagram showing an example of a normal response to a data disclosure request command according to this embodiment. As described above, Fig. 21 shows an example of the case in which the number of received user identifiers does not reach "two", for example.

If the number of received user identifiers does not reach, for example, "two", the response includes the "number of additionally receivable identifiers" (number-of-receptions information) and a "status byte" (normal end status byte) as shown in Fig. 21. In the example shown in Fig. 21, the number-of-receptions determination unit 54 transmits a response including the "number of additionally receivable identifiers" of "1" and a "status byte" of "9000" to the external apparatus 2 via the communication unit 40.

If the number of user identifiers received from the external apparatus 2 reaches, for example, "two", the number-of-receptions determination unit 54 causes the disclosure method selection unit 51 a to acquire disclosure method information corresponding to the two user identifiers from the disclosure method storage 82a.

Note that the disclosure processing unit 52 generates output data in which at least a portion of confidential data corresponding to the data identifier is masked, in accordance with the disclosure method information acquired by the disclosure method selection unit 51 a, and transmits the output data to the external apparatus 2. Moreover, the count of the number of user identifiers received from the external apparatus 2 is cleared (reset) if the output data is transmitted to the external apparatus 2, for example.

Next, the operations of the IC card 1c of this embodiment will be described with reference to drawings.

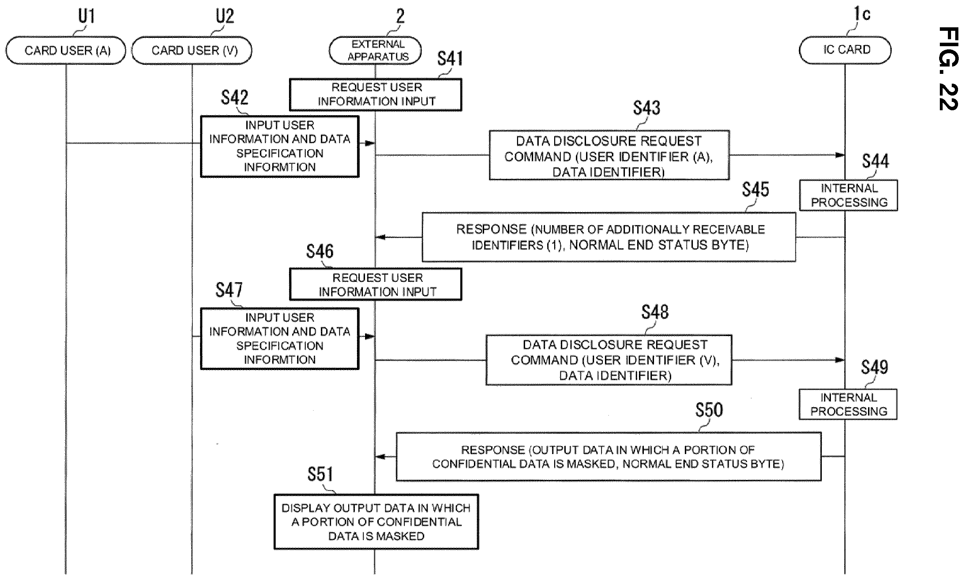

Fig. 22 is a diagram showing an example of the operations of a data disclosure request command in this embodiment. Note that the example shown in Fig. 22 indicates an example of the case in which a data disclosure request command has been normally executed. Also, in this figure, a card user U1 indicates an IC card 1c user corresponding to a user identifier of "A", and a card user U2 indicates an IC card 1c user corresponding to a user identifier of "V".

As shown in Fig. 22, first, the external apparatus 2 makes a user information input request (step S41). For example, the external apparatus 2 performs display for prompting the card user U1 to input user information.

Next, the card user U1 inputs user information and data specification information (that is, information that indicates or specifies certain information) in the external apparatus 2 (step S42). The external apparatus 2 receives the user information and data specification information from the card user U1, performs user authentication, and generates a data disclosure request command including the user identifier (A) corresponding to the card user U1 and a data identifier corresponding to the data specification information.

Next, the external apparatus 2 transmits the data disclosure request command including the user identifier (A) and the data identifier to the IC card 1c (step S43). Accordingly, the control unit 50c of the IC card 1c receives the data disclosure request command via the communication unit 40.

Next, the IC card 1c executes internal processing for the data disclosure request command (step S44). Specifically, the number-of-receptions determination unit 54 of the control unit 50c counts the number of user identifiers received from the external apparatus 2, and, for example, determines whether or not the number of received user identifiers reaches "two". In this case, the number of received user identifiers does not reach "two", and thus the number-of-receptions determination unit 54 generates a response including a "number of additionally receivable identifiers" of "1" and a "status byte" of "9000", as shown in Fig. 21.

Next, the IC card 1c transmits the response including the number of additionally receivable identifiers (one) and the normal status byte to the external apparatus 2 (step S45). Specifically, the number-of-receptions determination unit 54 transmits the response including a "number of additionally receivable identifiers" of "one" and a "status byte" of "9000", to the external apparatus 2 via the communication unit 40, as shown in Fig. 21.

Next, the external apparatus 2 makes a user information input request (step S46). For example, the external apparatus 2 performs display for prompting the card user U2 to input user information.

Next, the card user U2 inputs user information and data specification information in the external apparatus 2 (step S47). The external apparatus 2 receives the user information and data specification information from the card user U2, performs user authentication, and generates a data disclosure request command including the user identifier (V) corresponding to the card user U2 and a data identifier corresponding to the data specification information.

Next, the external apparatus 2 transmits the data disclosure request command including the user identifier (V) and the data identifier to the IC card 1c (step S48). Accordingly, the control unit 50c of the IC card 1c receives the data disclosure request command via the communication unit 40.

Next, the IC card 1c executes internal processing for the data disclosure request command (step S49). Specifically, the number-of-receptions determination unit 54 counts the number of user identifiers received from the external apparatus 2, and, for example, determines whether or not the number of received user identifiers reaches "two". In this case, the number of received user identifiers reaches "two", and thus the number-of-receptions determination unit 54 causes the disclosure method selection unit 51a to acquire disclosure method information corresponding to the two user identifiers from the disclosure method storage 82a. The disclosure method selection unit 51a acquires, from the disclosure method table in the disclosure method storage 82a, disclosure method information corresponding to the two user identifiers (the user identifier (A) and the user identifier (V)) and the received data identifier, and outputs the disclosure method information to the disclosure processing unit 52. The disclosure processing unit 52 then acquires confidential data corresponding to the data identifier from the confidential data storage 81, and masks a portion of the acquired confidential data in accordance with the disclosure method information acquired by the disclosure method selection unit 51a to generate output data.

Next, the IC card 1c transmits, to the external apparatus 2, a response to the data disclosure request command (step S50). Specifically, the disclosure processing unit 52 transmits a response including a normal end status byte and the output data in which a portion of confidential data is masked to the external apparatus 2 via the communication unit 40.

Next, the external apparatus 2 displays the received output data (step S51). Accordingly, the confidential data a portion of which is masked is disclosed, and the card user U1 and the card user U2, for example, view the output data that is the confidential data a portion of which is masked through the display by the external apparatus 2.

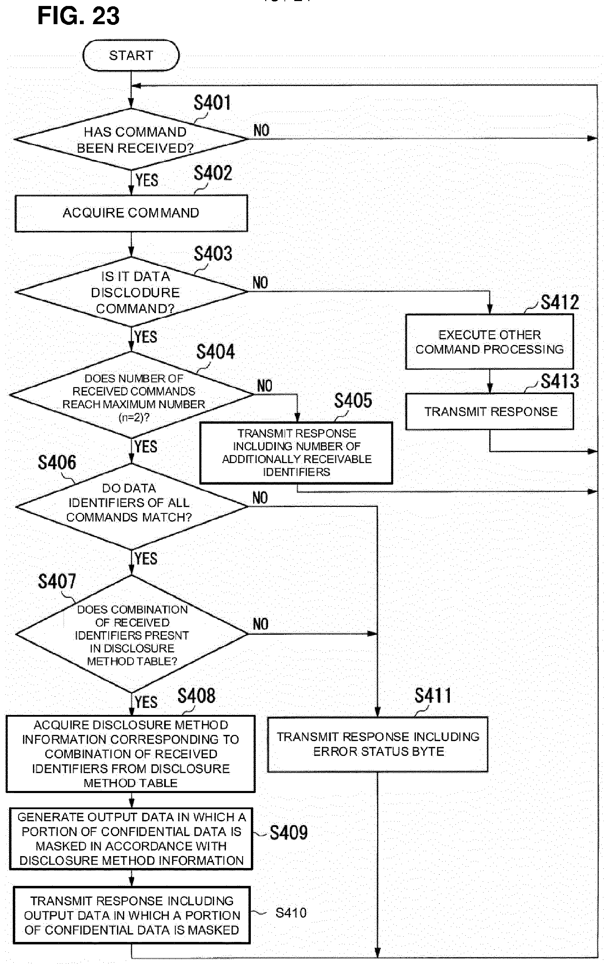

Next, processing for a data disclosure request command in the IC card 1c will be described with reference to Fig. 23.

Fig. 23 is a flowchart showing an example of the operation of a data disclosure request command of this embodiment.

As shown in Fig. 23, first, the control unit 50c of the IC card 1c determines whether or not a command has been received (step S401). Note that the processing of steps S401 to S403 is similar to the processing of steps S101 to S103 shown in Fig. 10, and thus its description is omitted here. In step S403, if the received command is a disclosure request command (step S403: YES), the control unit 50c advances the procedure to step S404. If the received command is not a disclosure request command (step S403: NO), the control unit 50c advances the procedure to step S412.

In step S404, the number-of-receptions determination unit 54 of the control unit 50c determines whether or not the number of received commands reaches a maximum value (e.g., n = 2). Specifically, the number-of-receptions determination unit 54 counts the number of user identifiers received from the external apparatus 2, and determines whether or not the number of received user identifiers reaches "two", for example. If the number of received commands reaches the maximum value (e.g., n = 2) (step S404: YES), the number-of-receptions determination unit 54 advances the procedure to step S406. If the number of received commands does not reach the maximum value (e.g., n = 2) (step S404: NO), the number-of-receptions determination unit 54 advances the procedure to step S405.

In step S405, the number-of-receptions determination unit 54 transmits a response including the number of additionally receivable identifiers to the external apparatus 2. Specifically, the number-of-receptions determination unit 54 transmits a response including the "number of additionally receivable identifiers" and a "status byte" as shown in Fig. 21 to the external apparatus 2 via the communication unit 40. After the processing of step S405, the number-of-receptions determination unit 54 returns the procedure to step S401.

In step S406, the number-of-receptions determination unit 54 determines whether or not the data identifiers of all the received commands (all the data disclosure request commands) match. If the data identifiers of all the commands match (step S406: YES), the number-of-receptions determination unit 54 advances the procedure to step S407. If the data identifiers of all the commands do not match (step S406: NO), the number-of-receptions determination unit 54 advances the procedure to step S411.

In step S407, the disclosure method selection unit 51a of the control unit 50c determines whether or not the combination of the received user identifiers is present in the disclosure method table in the disclosure method storage 82a. Specifically, the disclosure method selection unit 51 a determines whether or not disclosure method information corresponding to the two user identifiers and the data identifier that have been received is present in the disclosure method table, for example. If the combination of the received user identifiers is present in the disclosure method table (step S407: YES), the disclosure method selection unit 51a advances the procedure to step S408. If the combination of the received user identifiers is not present in the disclosure method table (step S407: NO), the disclosure method selection unit 51a advances the procedure to step S411.

In step S408, the disclosure method selection unit 51a acquires disclosure method information corresponding to the combination of the user identifiers received from the disclosure method table. Specifically, the disclosure method selection unit 51a acquires, from the disclosure method table in the disclosure method storage 82a, disclosure method information corresponding to the two user identifiers and the data identifier that have been received.

The processing of subsequent steps S409 to S413 is similar to the processing of steps S106 to S110 shown in Fig. 10, and thus its description is omitted here.

Note that in the embodiment above, an example of the case in which the disclosure method table deals with two user identifiers was described, but the disclosure method table may deal with three or more user identifiers.

As described above, the IC card 1c according to this embodiment is provided with the disclosure method storage 82a and the disclosure method selection unit 51a. The disclosure method storage 82a stores a plurality of (e.g., two) user identifiers and disclosure method information in association with each other. The disclosure method selection unit 51 a acquires, from the disclosure method storage 82a, disclosure method information corresponding to a plurality of (e.g., two) user identifiers.

Accordingly, the IC card 1c according to this embodiment can change a portion to be disclosed out of confidential data in accordance with a combination of a plurality of users. Specifically, when a predetermined plurality of users are all present, the IC card 1c according to this embodiment can be used for disclosing a portion of the confidential data, for example.

Also, the IC card 1c according to this embodiment is further provided with the number-of-receptions determination unit 54. If the number of user identifiers received from the external apparatus 2 reaches the number of (e.g., "two") user identifiers that are stored in association with the disclosure method information in the disclosure method storage 82a, the number-of-receptions determination unit 54 causes the disclosure method selection unit 51a to acquire disclosure method information corresponding to a plurality of user identifiers from the disclosure method storage 82a. If the number of received user identifiers does not reach the number of user identifiers (e.g., "two") stored in the disclosure method storage 82a, the number-of-receptions determination unit 54 transmits, to the external apparatus 2, number-of-receptions information (e.g., the "number of additionally receivable identifiers") indicating the number of additional receptions required to reach the number of user identifiers stored in the disclosure method storage 82a (e.g., "two").

Accordingly, the IC card 1c according to this embodiment can appropriately acquire a plurality of user identifiers using simple means. Also, if the required number of user identifiers is unknown, the IC card 1c according to this embodiment can notify the external apparatus 2 of the required number of user identifiers.

### Fifth Embodiment

Next, an IC card 1d of a fifth embodiment will be described with reference to drawings.

In this embodiment, another example of the case in which the IC card 1d changes a portion of disclosure of confidential data in accordance with a combination of a plurality of users will be described.

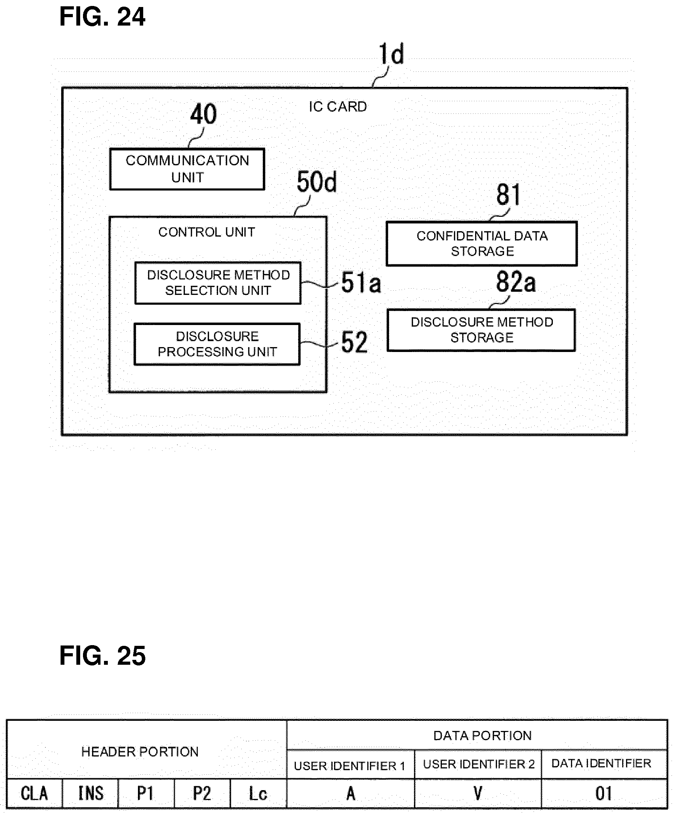

Fig. 24 is a block diagram showing an example of the functional configuration of the IC card 1d of this embodiment.

Note that the external view and the hardware configuration of the IC card 1d of this embodiment are similar to those in the first embodiment shown in Figs. 1 and 2, and thus their description is omitted. Moreover, in Fig. 24, the same reference signs are given to the same constituent elements as those shown in Figs. 3 and 19, and their description is omitted.

As shown in Fig. 24, the IC card 1d is provided with a communication unit 40, a control unit 50d, a confidential data storage 81 and a disclosure method storage 82a. Also, the control unit 50d is provided with a disclosure method selection unit 51a and a disclosure processing unit 52.

This embodiment is different from the fourth embodiment in that the IC card 1d is not provided with the number-of-receptions determination unit 54, but receives a plurality of user identifiers by a single data disclosure request command.

Note that in this embodiment, a data disclosure request command has a data format as shown in Fig. 25.

Fig. 25 is a diagram showing an example of a data format of a data disclosure request command of this embodiment. The APDU format of the command message of a data disclosure request command includes a header portion and a data portion. Also, the data portion of the data disclosure request command includes a "user identifier 1", a "user identifier 2" and a "data identifier". The example shown in Fig. 25 indicates a data disclosure request command in which the "user identifier 1" is "A", the "user identifier 2" is "V", and the "data identifier" is "01".

Accordingly, in this embodiment, the IC card 1d receives a plurality of user identifiers by a single data disclosure request command.

For example, the control unit 50d is realized by the CPU 5, the RAM 7 and the ROM 6 or the EEPROM 8, and performs the entire control of the IC card 1d. The control unit 50d is similar to the control unit 50c of the fourth embodiment except that the control unit 50d is not provided with the number-of-receptions determination unit 54.

Note that in this embodiment, the disclosure method selection unit 51a acquires disclosure method information corresponding to two user identifiers included in a data disclosure request command as shown in Fig. 25, from the disclosure method table of the disclosure method storage 82a.

Next, the operations of the IC card 1d of this embodiment will be described with reference to drawings.

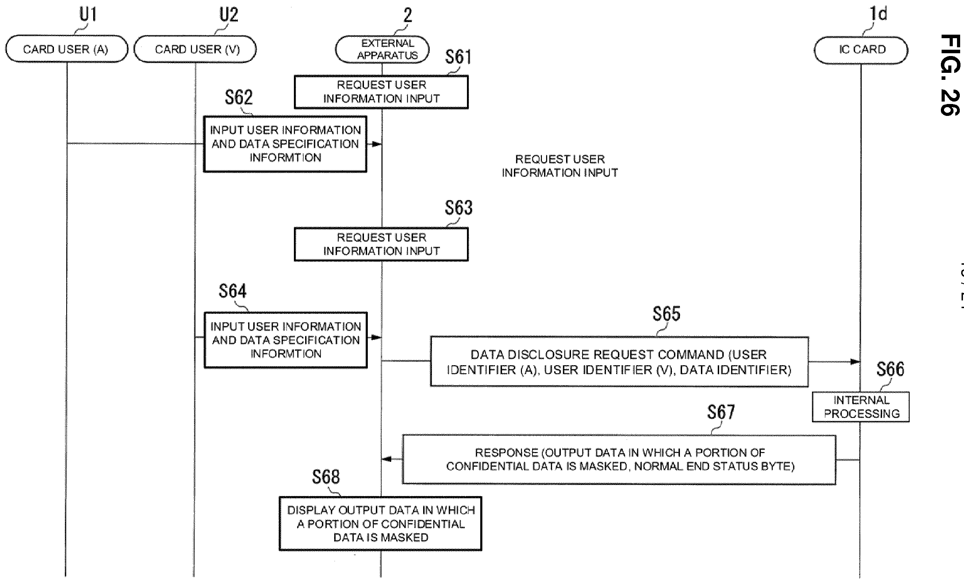

Fig. 26 is a diagram showing an example of the operation of a data disclosure request command in this embodiment. Note that Fig. 26 shows an example of the case in which a data disclosure request command has been normally executed. Moreover, in this figure, the card user U1 and the card user U2 are similar to the card users described above with reference to Fig. 22.

As shown in Fig. 26, first, the external apparatus 2 makes a user information input request (step S61). For example, the external apparatus 2 performs display for prompting the card user U1 to input user information.

Next, the card user U1 inputs user information and data specification information in the external apparatus 2 (step S62). The external apparatus 2 receives the user information and data specification information from the card user U1, and performs user authentication.

Next, the external apparatus 2 makes a user information input request (step S63). For example, the external apparatus 2 performs display for prompting the card user U2 to input user information.

Next, the card user U2 inputs user information and data specification information in the external apparatus 2 (step S64). The external apparatus 2 receives the user information and data specification information from the card user U2, and performs user authentication. The external apparatus 2 generates a data disclosure request command including the user identifier (A) corresponding to the card user U1, the user identifier (V) corresponding to the card user U2, and a data identifier corresponding to the data specification information.

Next, the external apparatus 2 transmits the data disclosure request command including the user identifier (A), the user identifier (V) and the data identifier to the IC card 1d (step S48). Accordingly, the control unit 50d of the IC card 1d receives the data disclosure request command via the communication unit 40.

Next, the IC card 1d executes internal processing for the data disclosure request command (step S49). Specifically, the disclosure method selection unit 51a of the control unit 50d acquires, from the disclosure method table in the disclosure method storage 82a, disclosure method information corresponding to the two user identifiers (the user identifier (A) and the user identifier (V)) and the received data identifier, and outputs the disclosure method information to the disclosure processing unit 52. The disclosure processing unit 52 then acquires confidential data corresponding to the data identifier from the confidential data storage 81, and generates output data in which a portion of the acquired confidential data is masked in accordance with the disclosure method information acquired by the disclosure method selection unit 51a.

The processing of subsequent steps S67 and S68 is similar to the processing of steps S50 and S51 shown in Fig. 22, and thus its description is omitted here.

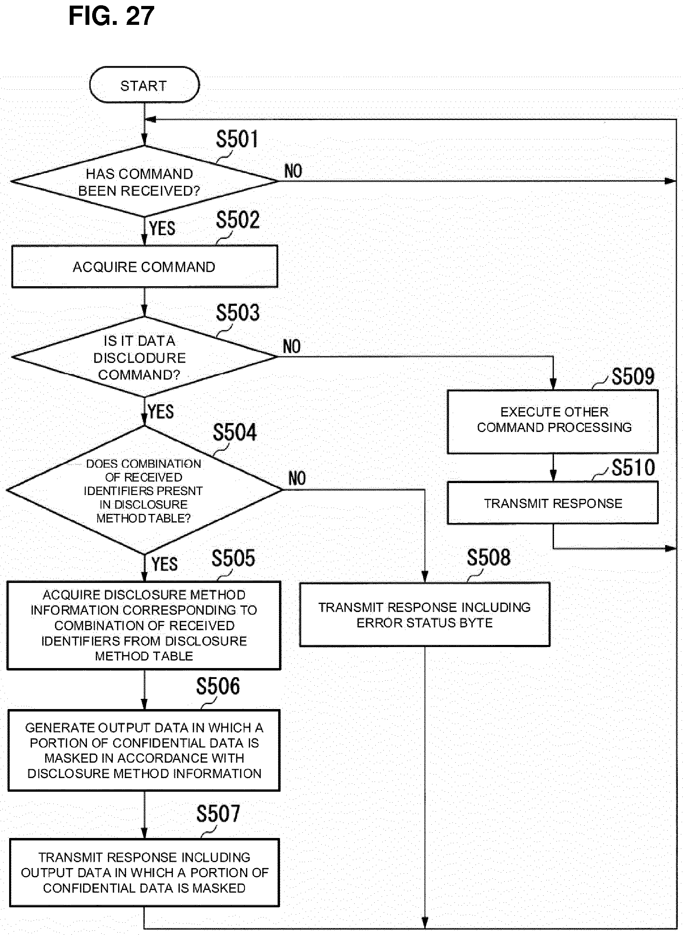

Next, processing for a data disclosure request command in the IC card 1d will be described with reference to Fig. 27.

Fig. 27 is a flowchart showing an example of the operation of a data disclosure request command of this embodiment.

As shown in Fig. 27, first, the control unit 50d of the IC card 1d determines whether or not a command has been received (step S501). Note that the processing of steps S501 to S503 is similar to the processing of steps S101 to S103 shown in Fig. 10, and thus its description is omitted here. In step S503, if the received command is a disclosure request command (step S503: YES), the control unit 50d advances the procedure to step S504. If the received command is not a disclosure request command (step S503: NO), the control unit 50d advances the procedure to step S509. Here, a disclosure request command includes two user identifiers (e.g., the "user identifier 1" and the "user identifier 2") as shown in Fig. 25.

In addition, the processing of subsequent steps 504 to S510 is similar to the processing of steps S407 to S413 shown in Fig. 23, and thus its description is omitted.

As described above, the IC card 1d according to this embodiment is provided with the disclosure method storage 82a and the disclosure method selection unit 51a. The disclosure method storage 82a stores a plurality of (e.g., two) user identifiers and disclosure method information in association with each other. The disclosure method selection unit 51 a acquires, from the disclosure method storage 82a, disclosure method information corresponding to a plurality of (e.g., two) user identifiers.

Accordingly, the IC card 1d according to this embodiment can change a portion to be disclosed out of confidential data in accordance with a combination of a plurality of users, similarly to the fourth embodiment.

### Sixth Embodiment

Next, an IC card 1e of a sixth embodiment will be described with reference to drawings.

In this embodiment, an example of the case in which user authentication processing is required before the IC card 1e executes a disclosure request command will be described.

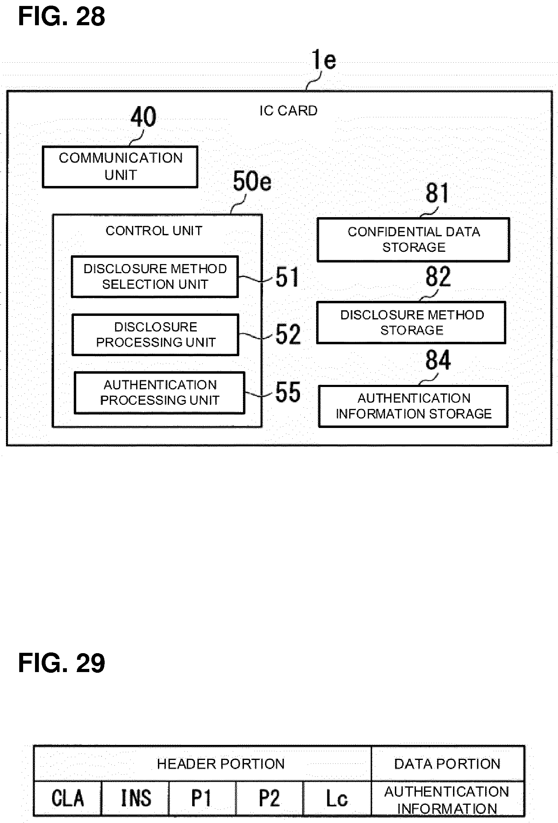

Fig. 28 is a block diagram showing an example of the functional configuration of the IC card 1e of this embodiment.

Note that the external view and the hardware configuration of the IC card 1e of this embodiment are similar to those in the first embodiment shown in Figs. 1 and 2, and thus their description is omitted. Moreover, in Fig. 28, the same reference signs are given to the same constituent elements as those shown in Fig. 3, and their description is omitted.

As shown in Fig. 28, the IC card 1e is provided with a communication unit 40, a control unit 50e, a confidential data storage 81, a disclosure method storage 82 and an authentication information storage 84. Also, the control unit 50e is provided with a disclosure method selection unit 51, a disclosure processing unit 52 and an authentication processing unit 55.

This embodiment is different from the first embodiment in that the IC card 1e is provided with the authentication information storage 84 and the authentication processing unit 55.

The authentication information storage 84 is a storage constituted by the EEPROM 8, for example. The authentication information storage 84 stores authentication information for authenticating a user such as a password, a PIN (Personal Identification Number) and an authentication key in advance.

For example, the control unit 50e is realized by the CPU 5, the RAM 7, and the ROM 6 or the EEPROM 8, and performs the entire control of the IC card 1e. The control unit 50e is similar to the control unit 50 of the first embodiment except that the control unit 50e is provided with the authentication processing unit 55.

The authentication processing unit 55 executes authentication processing for authenticating a user in accordance with an authentication command. For example, the authentication processing unit 55 determines, in accordance with an authentication command received from the external apparatus 2, whether or not received authentication information matches authentication information stored in the authentication information storage 84. If the received authentication information matches the authentication information stored in the authentication information storage 84, the authentication processing unit 55 determines that authentication was successful, and stores "1" in an authentication success flag. Here, the authentication success flag is constituted by the RAM 7, for example, and in a state before an authentication command is executed, is set to "0". If the authentication was successful, the authentication processing unit 55 transmits a response including a normal end status byte to the external apparatus 2 via the communication unit 40. If the received authentication information does not match the authentication information stored in the authentication information storage 84, the authentication processing unit 55 determines that the authentication failed. If the authentication failed, the authentication processing unit 55 transmits a response including an error status byte to the external apparatus 2 via the communication unit 40.

Here, an authentication command has a data format as shown in Fig. 29.

Fig. 29 is a diagram showing an example of a data format of an authentication command of this embodiment. The APDU format of the command message of an authentication command includes a header portion and a data portion. The data portion of the authentication command includes "authentication information".

Note that if the above-described authentication success flag is set to"1", the disclosure method selection unit 51 of this embodiment acquires disclosure method information from the disclosure method storage 82. If the above-described authentication success flag is set to "1", the disclosure processing unit 52 of this embodiment masks at least a portion of confidential data in accordance with the disclosure method information acquired by the disclosure method selection unit 51 to generate output data, and transmits the output data to the external apparatus 2. In other words, if the user is authenticated by the authentication processing unit 55, the disclosure processing unit 52 generates output data in which at least a portion of confidential data is hidden (masked) in accordance with the data disclosure method selected by the disclosure method selection unit 51, and transmits the output data to the external apparatus 2.

Next, the operations of the IC card 1e of this embodiment will be described with reference to drawings.

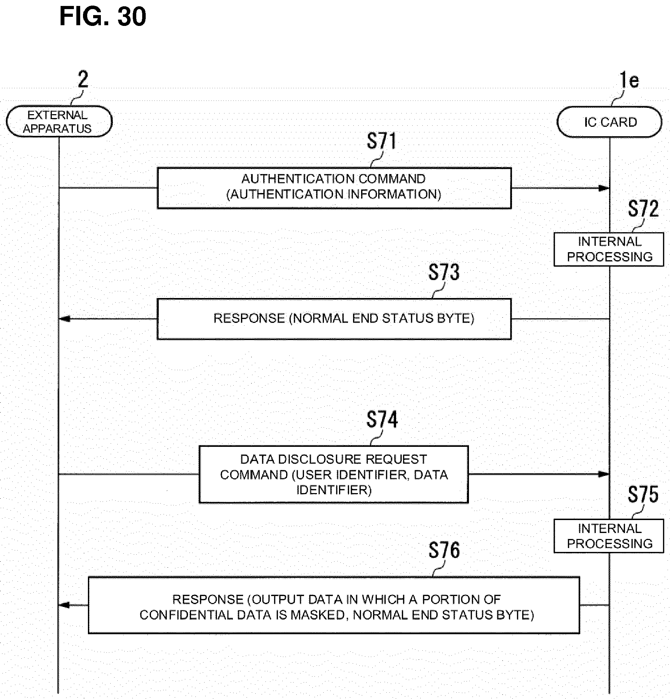

Fig. 30 is a diagram showing an example of the operations of an authentication command and a data disclosure request command in this embodiment. Note that the example shown in Fig. 30 shows the case in which an authentication command and a data disclosure request command have been normally executed.

As shown in Fig. 30, first, the external apparatus 2 transmits an authentication command to the IC card 1e (step S71). Specifically, the external apparatus 2 transmits an authentication command including authentication information as shown in Fig. 29. Accordingly, the control unit 50e of the IC card 1e receives the authentication command via the communication unit 40.

Next, the IC card 1e executes internal processing for the authentication command (step S72). Here, the authentication processing unit 55 of the control unit 50e executes authentication processing based on the received authentication information. For example, the authentication processing unit 55 compares the received authentication information with authentication information stored in the authentication information storage 84, and if the two pieces of data match, stores "1" in an authentication success flag. The authentication processing unit 55 then generates a response including a normal end status byte.

Next, the IC card 1e transmits, to the external apparatus 2, a response to the authentication command (step S73). Specifically, the authentication processing unit 55 transmits a response including a normal end status byte to the external apparatus 2 via the communication unit 40.

The IC card 1e of this embodiment authenticates a user using the authentication command in this manner, and after that, as shown in steps S74 to S76, a data disclosure request command can be executed. Note that the processing of steps S74 to S76 is similar to the processing of steps S11 to S13 shown in Fig. 8, and thus its description is omitted here.

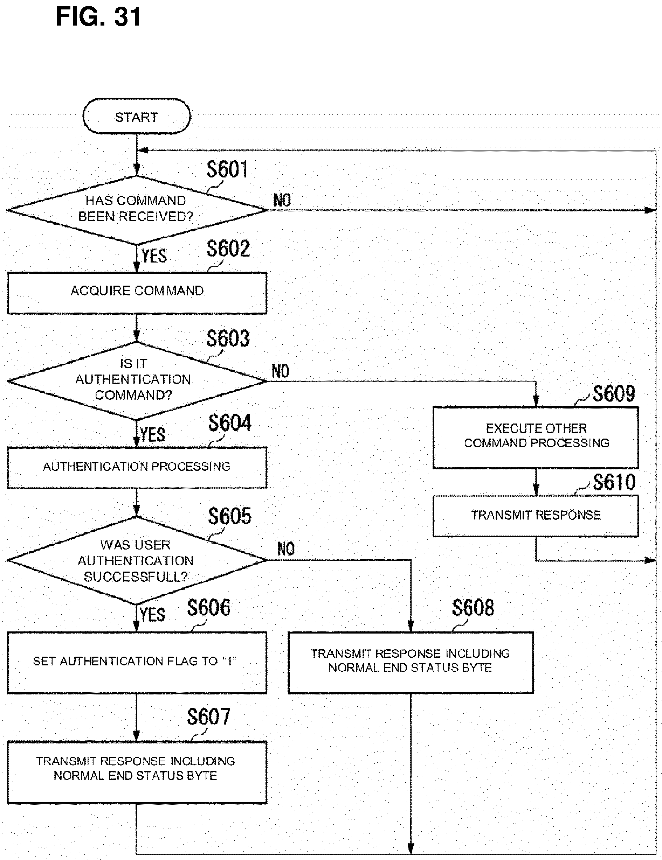

Next, processing for an authentication command in the IC card 1e will be described with reference to Fig. 31.

Fig. 31 is a flowchart showing an example of the operation of an authentication command of this embodiment.

As shown in Fig. 31, first, the control unit 50e of the IC card 1e determines whether or not a command has been received (step S601). If a command has been received (step S601: YES), the control unit 50e advances the procedure to step S602. If a command has not been received (step S601: NO), the control unit 50e returns the procedure to step S601.

In step S602, the control unit 50e acquires the command. Specifically, the control unit 50e acquires the command message received by the communication unit 40.

Next, the control unit 50e determines whether or not the received command is an authentication command (step S603). If the received command is an authentication command (step S603: YES), the control unit 50e advances the procedure to step S604. If the received command is not an authentication command (step S603: NO), the control unit 50e advances the procedure to step S609.

In step S604, the authentication processing unit 55 of the control unit 50e executes authentication processing. The authentication processing unit 55 determines whether or not the received authentication information matches authentication information stored in the authentication information storage 84.

Next, the authentication processing unit 55 determines whether or not user authentication was successful (step S605). The authentication processing unit 55 determines whether or not user authentication was successful in accordance with whether or not the received authentication information matches the authentication information stored in the authentication information storage 84. If the received authentication information matches the authentication information stored in the authentication information storage 84, the authentication processing unit 55 determines that the user authentication was successful. If the user authentication was successful (step S605: YES), the authentication processing unit 55 advances the procedure to step S606. If the user authentication failed (step S605: NO), the authentication processing unit 55 advances the procedure to step S608.

In step S606, the authentication processing unit 55 sets the authentication success flag to "1". Specifically, the authentication processing unit 55 stores "1" in the authentication success flag.

Next, the authentication processing unit 55 transmits a response including a normal end status byte to the external apparatus 2 (step S607). Specifically, the authentication processing unit 55 transmits a response including a normal end status byte to the external apparatus 2 via the communication unit 40. After the processing of step S607, the authentication processing unit 55 returns the procedure to step S601.

In step S608, the authentication processing unit 55 transmits a response including an error status byte to the external apparatus 2. Specifically, the authentication processing unit 55 transmits a response including an error status byte indicating that the user authentication failed, to the external apparatus 2 via the communication unit 40. After the processing of step S608, the authentication processing unit 55 returns the procedure to step S601.

In step S609, the control unit 50e executes other command processing (processing for a command other than an authentication command).

Next, the control unit 50e transmits a response to the external apparatus 2 (step S610). Specifically, the control unit 50e transmits a response including a result of executing other command processing to the external apparatus 2 via the communication unit 40. After the processing of step S610, the control unit 50e returns the procedure to step S601.

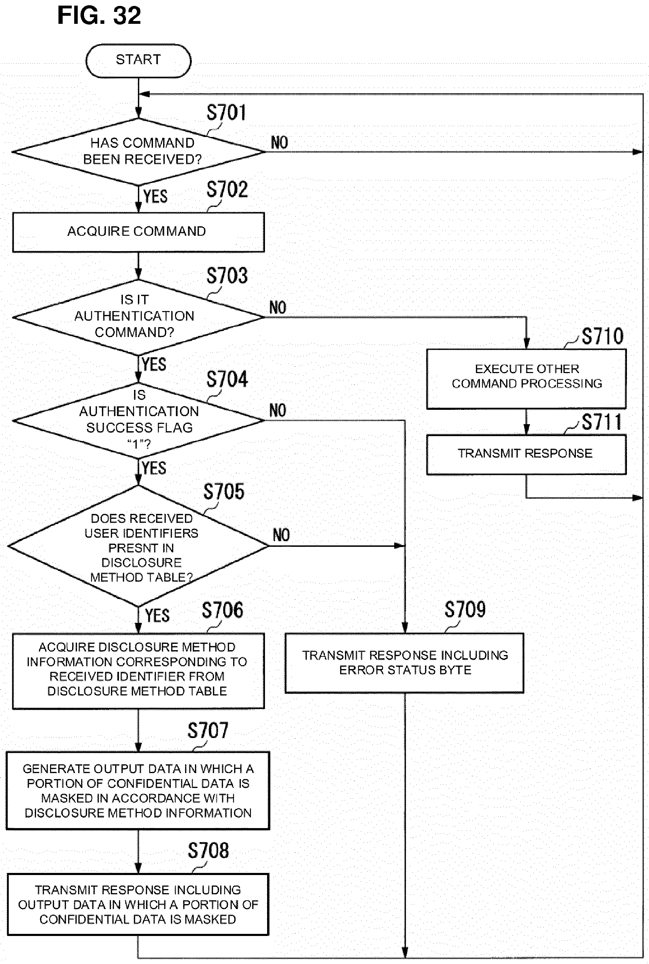

Next, processing for a data disclosure request command in the IC card 1e will be described with reference to Fig. 32.

Fig. 32 is a flowchart showing an example of the operation of a data disclosure request command of this embodiment.

As shown in Fig. 32, first, the control unit 50e of the IC card 1e determines whether or not a command has been received (step S701). Note that the processing of steps S701 to S703 is similar to the processing of steps S101 to S103 shown in Fig. 10, and thus its description is omitted here. In step S703, if the received command is a disclosure request command (step S703: YES), the control unit 50e advances the procedure to step S704. If the received command is not a disclosure request command (step S703: NO), the control unit 50e advances the procedure to step S710.

In step S704, the control unit 50e determines whether or not the authentication success flag is set to "1". If the authentication success flag is set to "1" (step S704: YES), the control unit 50e advances the procedure to step S705. If the authentication success flag is not set to "1" (step S704: NO), the control unit 50e advances the procedure to step S709.

Moreover, the processing of subsequent steps S705 to S711 is similar to the processing of steps S104 to S110 shown in Fig. 10, and thus its description is omitted.

As described above, the IC card 1e according to this embodiment is provided with the authentication processing unit 55 for authenticating a user. If a user was authenticated by the authentication processing unit 55 (if user authentication was successful), the disclosure processing unit 52 transmits, to the external apparatus 2, output data in which at least a portion of confidential data is hidden in accordance with a data disclosure method selected by the disclosure method selection unit 51.

Accordingly, the IC card 1e according to this embodiment can change a portion to be disclosed out of the confidential data in accordance with a user, while ensuring security.

### Seventh Embodiment

Next, an IC card 1f of a seventh embodiment will be described with reference to drawings.

In this embodiment, another example of the case in which user authentication processing is required before the IC card 1f executes a disclosure request command will be described.

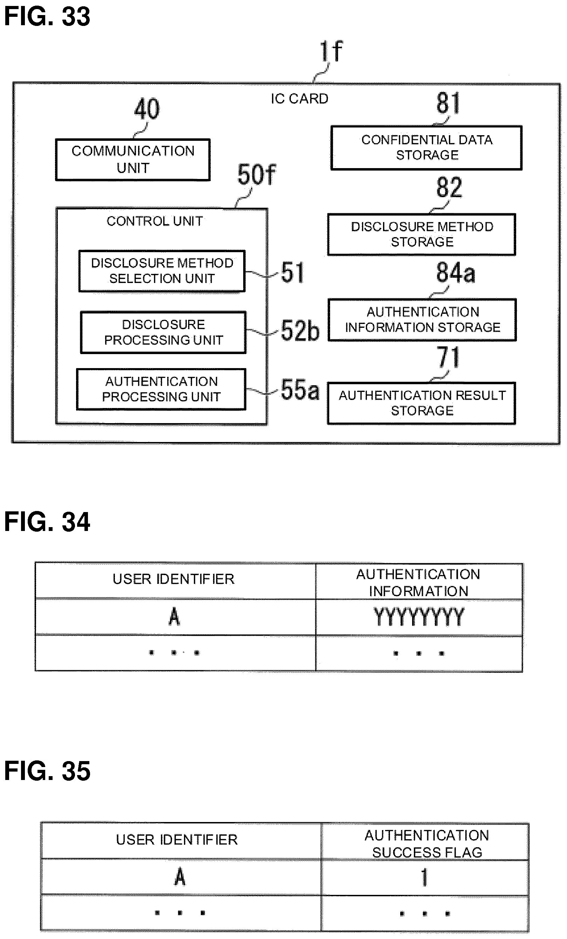

Fig. 33 is a block diagram showing an example of the functional configuration of the IC card 1f of this embodiment.

Note that the external view and the hardware configuration of the IC card 1f of this embodiment are similar to those in the first embodiment shown in Figs. 1 and 2, and thus their description is omitted. Moreover, in Fig. 33, the same reference signs are given to the same constituent elements as those shown in Fig. 28, and their description is omitted.

As shown in Fig. 33, the IC card 1f is provided with a communication unit 40, a control unit 50f, a confidential data storage 81, a disclosure method storage 82, an authentication information storage 84a and an authentication result storage 71. Also, the control unit 50f is provided with a disclosure method selection unit 51, a disclosure processing unit 52b and an authentication processing unit 55a.

In this embodiment, the IC card 1f is provided with the authentication result storage 71, and information stored in the authentication information storage 84a and the processing of the authentication processing unit 55a and the disclosure processing unit 52b are different from those in the sixth embodiment.

For example, the authentication information storage 84a is a storage constituted by the EEPROM 8. The authentication information storage 84a stores a user identifier and authentication information for authenticating a user such as a password, a PIN or an authentication key in association with each other.

Fig. 34 is a diagram showing a data example in the authentication information storage 84a of this embodiment.

For example, the authentication information storage 84a stores "user identifiers" and "authentication information" in association with each other, as shown in Fig. 34.

For example, the example shown in Fig. 34 indicates that a "user identifier" is "A", and "authentication information" corresponding to the "user identifier" is "YYYYYYYY".

For example, the authentication result storage 71 is a storage constituted by the RAM 7. The authentication result storage 71 stores a user identifier and an authentication success flag (authentication result information) indicating whether or not the user has been authenticated by the authentication processing unit 55a in association with each other.

Fig. 35 is a diagram showing a data example in the authentication result storage 71 of this embodiment.

As shown in Fig. 35, the authentication result storage 71 stores a "user identifier" and an "authentication success flag" in association with each other, for example.

For example, the example shown in Fig. 35 indicates that a "user identifier" is "A", and an "authentication success flag" corresponding to the "user identifier" is set to "1". Here, the "authentication success flag" being "1" indicates that the user has been authenticated by the authentication processing unit 55a. Also, the "authentication success flag" being set to "0" indicates that the user has not been authenticated by the authentication processing unit 55a.

Note that information stored in the authentication result storage 71 is initialized by starting the IC card 1f or executing cold reset.

The authentication processing unit 55a executes authentication processing for authenticating a user in accordance with an authentication command. For example, the authentication processing unit 55a determines whether or not received authentication information matches authentication information stored in the authentication information storage 84a, in accordance with an authentication command received from the external apparatus 2. If the received authentication information matches the authentication information stored in the authentication information storage 84a, the authentication processing unit 55a determines that the authentication was successful. In this case, the authentication processing unit 55a acquires a user identifier stored in the authentication information storage 84a in association with authentication information that has been successfully authenticated, and stores "1" in association with the acquired user identifier in the authentication success flag. Specifically, the authentication processing unit 55a stores the user identifier and "1" as the authentication success flag in association with each other in the authentication result storage 71.

If the authentication was successful, the authentication processing unit 55a transmits a response including a normal end status byte to the external apparatus 2 via the communication unit 40. If the received authentication information does not match the authentication information stored in the authentication information storage 84a, the authentication processing unit 55a determines that the authentication failed. If the authentication failed, the authentication processing unit 55a transmits a response including an error status byte to the external apparatus 2 via the communication unit 40. In this case, the authentication processing unit 55a may set the authentication success flag of the authentication result storage 71 corresponding to the user identifier to "0".

If the user authenticated by the authentication processing unit 55a matches the user corresponding to the user identifier, the disclosure processing unit 52b generates output data in which at least a portion of confidential data is hidden in accordance with a data disclosure method selected by the disclosure method selection unit 51, and transmits the output data to the external apparatus 2. For example, if the authentication success flag stored in the authentication result storage 71 in association with the user identifier received from the external apparatus 2 is information indicating that the user has been authenticated (e.g., "1"), the disclosure processing unit 52b executes disclosure processing. Specifically, if the authentication success flag stored in the authentication result storage 71 in association with the received user identifier is "1", the disclosure processing unit 52b generates output data in which at least a portion of confidential data is hidden in accordance with the data disclosure method selected by the disclosure method selection unit 51, and transmits the output data to the external apparatus 2.

Next, the operations of the IC card 1f of this embodiment will be described with reference to drawings.

The operations of an authentication command and a data disclosure request command in the IC card 1f of this embodiment are basically similar to those in the sixth embodiment shown in Fig. 30.

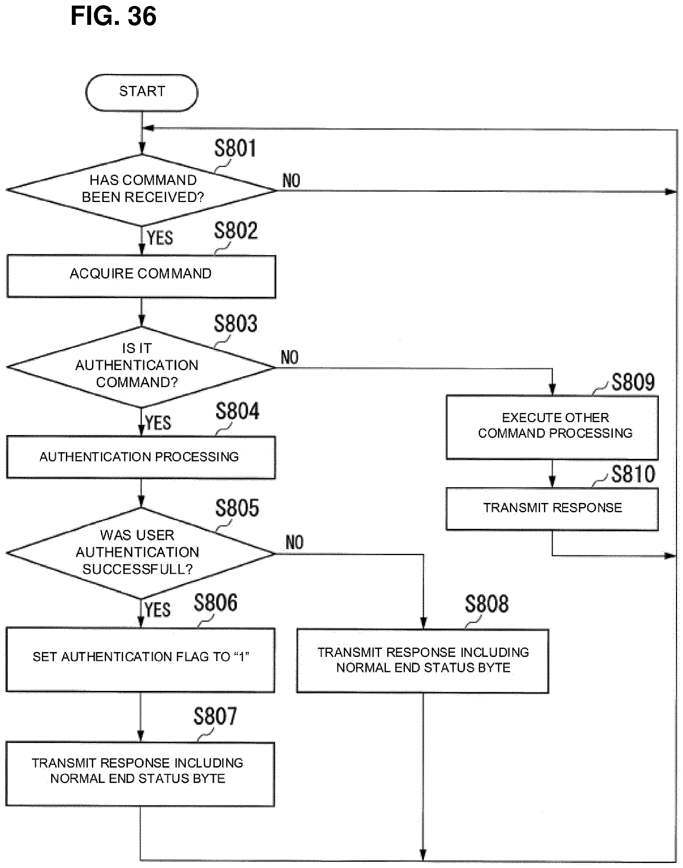

Next, processing for an authentication command in the IC card 1f will be described with reference to Fig. 36.

Fig. 36 is a flowchart showing an example of the operation of an authentication command of this embodiment.

In Fig. 36, the processing of steps S801 to S805 is similar to the processing of steps S601 to S605 shown in Fig. 31, and thus its description is omitted here.

In step S806 for the case where user authentication is successful (step S805: YES), the authentication processing unit 55a of the IC card 1f sets the authentication success flag to "1" in association with the user identifier. For example, the authentication processing unit 55a acquires the user identifier stored in the authentication information storage 84a in association with authentication information indicating that authentication was successful, and stores the acquired user identifier and "1" as the authentication success flag in association with each other in the authentication result storage 71.

In addition, the processing of steps S806 to S810 is similar to the processing of steps S606 to S610 shown in Fig. 31, and thus its description is omitted here.

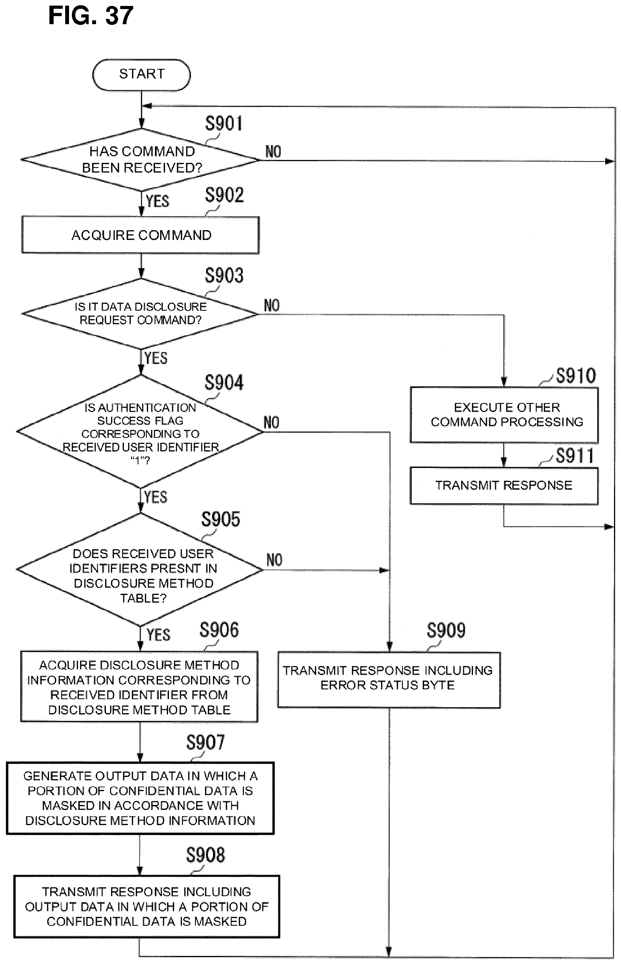

Next, processing for a data disclosure request command in the IC card 1f will be described with reference to Fig. 37.

Fig. 37 is a flowchart showing an example of the operation of a data disclosure request command of this embodiment.

In Fig. 37, the processing of steps S901 to S903 is similar to the processing of steps S701 to S703 shown in Fig. 32, and thus its description is omitted here. Note that in step S903, if the received command is a disclosure request command (step S903: YES), the control unit 50f advances the procedure to step S904. If the received command is not a disclosure request command (step S903: NO), the control unit 50f advances the procedure to step S910.

In step S904, the disclosure processing unit 52b of the control unit 50f determines whether or not the authentication success flag corresponding to the received user identifier is set to "1". Specifically, the disclosure processing unit 52b determines whether or not the authentication success flag corresponding to the user identifier included in the disclosure request command, out of authentication success flags stored in the authentication result storage 71, is set to "1". If the authentication success flag is set to "1" (step S904: YES), the disclosure processing unit 52b advances the procedure to step S905. If the authentication success flag is not set to "1" (step S904: NO), the disclosure processing unit 52b advances the procedure to step S909.

In addition, the processing of subsequent steps S905 to S911 is similar to the processing of steps S705 to S711 shown in Fig. 32, and thus its description is omitted.

As described above, the IC card 1f according to this embodiment is provided with the authentication processing unit 55a and the disclosure processing unit 52b. If a user authenticated by the authentication processing unit 55a matches a user corresponding to a user identifier, the disclosure processing unit 52b generates output data in which at least a portion of confidential data which is hidden in accordance with a data disclosure method selected by the disclosure method selection unit 51 and transmits, the generated output data to the external apparatus 2,.

Accordingly, if a user authenticated by the authentication processing unit 55a matches a user corresponding to a user identifier, the IC card 1f according to this embodiment executes the processing for a data disclosure request command, and thus a portion to be disclosed out of confidential data can be changed in correspondence with a user while further ensuring security. For example, a configuration can be adopted in which if a user authenticated by the authentication processing unit 55a does not match a user corresponding to a received user identifier, the IC card 1f according to this embodiment does not execute the processing for a data disclosure request command.

Moreover, the IC card 1f according to this embodiment is provided with the authentication result storage 71 that stores a user identifier (user identification information) and an authentication success flag (authentication result information) indicating whether or not the user has been authenticated by the authentication processing unit 55a in association with each other. If the authentication success flag stored in the authentication result storage 71 in association with the user identifier received from the external apparatus 2 is information indicating that the user has been authenticated (e.g., "1"), the disclosure processing unit 52b generates output data in which at least a portion of confidential data is hidden in accordance with a data disclosure method indicated by a disclosure method information selected by the disclosure method selection unit 51 and transmits the generated output data to the external apparatus 2,.

Accordingly, the IC card 1f according to this embodiment can change a portion to be disclosed out of confidential data in correspondence with a user, while ensuring security by simple means that uses the authentication result storage 71.

Note that in this embodiment described above, an example was described in which the authentication result storage 71 is constituted by the RAM 7, but the authentication result storage 71 may be constituted by the EEPROM 8. Also, in this embodiment, an example was described in which the disclosure processing unit 52b executes processing for determining whether or not an authentication success flag corresponding to a received user identifier is set to "1", but the processing may be executed by the control unit 50f (another function element of the disclosure processing unit 52b).

### Eighth Embodiment

Next, an IC card 1g of an eighth embodiment will be described with reference to drawings.

In this embodiment, a modification of the seventh embodiment, namely, another example of the case in which user authentication processing is required before the IC card 1g executes a disclosure request command similarly to the seventh embodiment above will be described.

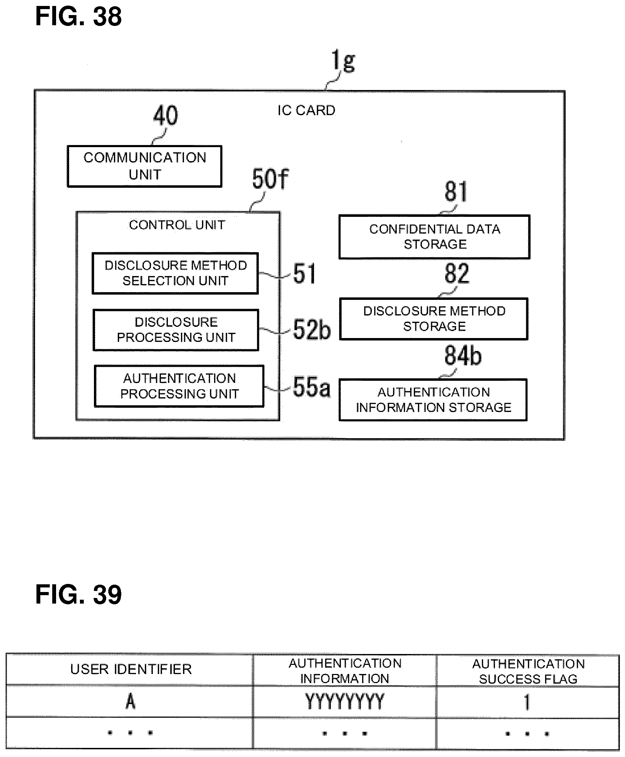

Fig. 38 is a block diagram showing an example of the functional configuration of the IC card 1g of this embodiment.

Note that the external view and the hardware configuration of the IC card 1g of this embodiment are similar to those in the first embodiment shown in Figs. 1 and 2, and thus their description is omitted. Moreover, in Fig. 38, the same reference signs are given to the same constituent elements as those shown in Figs. 28 and 33, and their description is omitted.

As shown in Fig. 38, the IC card 1g is provided with a communication unit 40, a control unit 50f, a confidential data storage 81, a disclosure method storage 82 and an authentication information storage 84b. Also, the control unit 50f is provided with a disclosure method selection unit 51, a disclosure processing unit 52b and an authentication processing unit 55a.

This embodiment is different from the seventh embodiment in that the IC card 1g is provided with the authentication information storage 84b acquired by integrating the above-described authentication result storage 71 and authentication information storage 84a.

The authentication information storage 84b (an example of an authentication result storage) is a storage constituted by the EEPROM 8, for example. The authentication information storage 84b stores authentication information for authenticating a user such as password, a PIN and an authentication key, a user identifier, and an authentication success flag (authentication result information) indicating whether or not a user has been authenticated by the authentication processing unit 55a in association with each other.

Fig. 39 is a diagram showing a data example in the authentication information storage 84b of this embodiment.

For example, the authentication information storage 84b stores a "user identifier", "authentication information" and an "authentication success flag" in association with each other, as shown in Fig. 39.

For example, the example shown in Fig. 39 indicates that the "user identifier" is "A", and the "authentication information" corresponding to the "user identifier" is "YYYYYYYY". The example also indicates that the "authentication success flag" corresponding to the "user identifier" and the "authentication information" is set to "1".

Next, the operations of the IC card 1g of this embodiment will be described.

The operations of an authentication command and a data disclosure request command in the IC card 1g of this embodiment are basically similar to those in the sixth embodiment shown in Fig. 30.

In addition, the operation of an authentication command of this embodiment is similar to the operation of an authentication command shown in Fig. 36 except that the processing of step S806 is different. In step S806, the authentication processing unit 55a of the IC card 1g sets the authentication success flag corresponding to the authentication information and the user identifier out of authentication success flags stored in the authentication information storage 84b to "1".

In addition, the operation of a data disclosure request command of this embodiment is similar to the operation of an authentication command shown in Fig. 37, and thus its description is omitted here. Note that in this embodiment, the disclosure processing unit 52b determines whether or not the authentication success flag corresponding to a user identifier included in a disclosure request command, out of the authentication success flags stored in the authentication information storage 84b, is set to "1".

As described above, the IC card 1g according to this embodiment is provided with the authentication information storage 84b that stores authentication information for authenticating a user, an authentication success flag (authentication result information) indicating whether or not a user has been authenticated by the authentication processing unit 55a, and a user identifier (user identification information) in association with each other. If an authentication success flag that is stored in association with a user identifier received from the external apparatus 2 in the authentication information storage 84b is information indicating that the user has been authenticated (e.g., "1"), the disclosure processing unit 52b generates output data in which at least a portion of confidential data is hidden in accordance with a data disclosure method indicated by disclosure method information selected by the disclosure method selection unit 51 and transmits the generated output data to the external apparatus 2,.

Accordingly, the IC card 1g according to this embodiment can change a portion to be disclosed out of confidential data in correspondent with a user, while ensuring security by simple means that uses the authentication information storage 84b.

In each of the embodiments above, an example was described in which the present invention is implemented by a single embodiment, but the present invention may be implemented by combining the entirety or portions of multiple embodiments. For example, the present invention may be implemented by combining the second embodiment and any of the third to sixth embodiments, or may be implemented by combining any of the third to fifth embodiments and any of the sixth to eighth embodiments.

In addition, for example, the IC card 1 may be provided with both the disclosure method table for one user identifier according to the first embodiment, and the disclosure method table for a plurality of user identifiers according to the fourth embodiment, and for example, switch the two disclosure method tables in accordance with a data identifier and the like and use those tables.

Moreover, in each of the embodiments above, a configuration is adopted in which the IC card 1 (1a to 1g) is provided with the EEPROM 8 as a rewritable non-volatile memory, but the present invention is not limited thereto. For example, the IC card 1 (1a to 1g) may be provided with a flash memory, a FeRAM (Ferroelectric Random Access Memory) or the like in place of the EEPROM 8.

Also, in each of the embodiments above, an example was described in which the IC card 1 (1a to 1g) communicates with the external apparatus 2 via the contact portion 3, but a configuration may be adopted in which the IC card 1 communicates with the external apparatus 2 via a contactless interface that uses a coil or the like.

Also, in each of the embodiments above, the IC card 1 (1a to 1g) is used as an example of a portable electronic device, but the portable electronic device is not limited to an IC card. The portable electronic device may be an electronic device such as an IC tag that does not have a card-like shape.

In addition, in the sixth to eighth embodiments above, an example was described in which authentication processing is processing for authenticating a user based on fixed authentication information, but, for example, authentication processing may be dynamic authentication processing that uses random numbers such as mutual authentication.

According to at least one of the embodiments above, the convenience can be improved by including a confidential data storage 81 that stores confidential data, a disclosure method selection unit 51 that selects a data disclosure method for disclosing the confidential data stored in the confidential data storage 81 based on a user identifier for identifying a user received from the external apparatus 2, and a disclosure processing unit 52 that generates output data in which at least a portion of confidential data is hidden in accordance with the data disclosure method selected by the disclosure method selection unit 51 and transmits the output data to the external apparatus 2.

The embodiments above can be expressed as:
a portable electronic device including:
   a communication unit configured to communicate with an external apparatus via a contact portion or a coil;
   a confidential data storage configured to store confidential data;
   a disclosure method storage configured to store user identification information and disclosure method information indicating a data disclosure method for disclosing the confidential data stored in the confidential data storage in association with each other;
   a disclosure method selection unit configured to select the data disclosure method by acquiring, from the disclosure method storage, the disclosure method information corresponding to the user identification information received from the external apparatus via the communication unit; and
   a disclosure processing unit configured to generate output data in which at least a portion of the confidential data is hidden in accordance with the disclosure method information acquired from the disclosure method storage by the disclosure method selection unit, and to transmit the output data to the external apparatus via the communication unit.

Note that the processing in each constituent element of the IC card 1 (1a to 1g) in the embodiments may be performed by recording a program for realizing the functions of each constituent element of the above-described IC cards 1 (1a to 1g) in a computer-readable recording medium, loading this program recorded in the recording medium to a computer system, and executing the program. Here, "loading a program recorded in a recording medium to a computer system, and executing the program" includes installing a program in a computer system. The "computer system" here includes an OS and hardware such as peripheral devices.

Moreover, the "computer readable recording medium" refers to a storage device, for example, a portable medium such as a flexible disk, a magneto optical disk, a ROM and a CD-ROM, a hard disk built in a computer system, and the like.

While certain embodiments have been described, these embodiments have been presented by way of example only, and are not intended to limit the scope of the inventions.

## Claims

1. A portable electronic device (1) comprising:
a confidential data storage (81) configured to store confidential data;
a disclosure method selection unit (51) configured to select disclosure method information indicating a data disclosure method for disclosing the confidential data, based on a user identification information for identifying a user that has been received from an external apparatus (2); and
a disclosure processing unit (52) configured to generate output data in which at least a portion of the confidential data is hidden in accordance with the disclosure method information selected by the disclosure method selection unit (51), and to transmit the output data to the external apparatus (2).

2. The portable electronic device (1) according to claim 1, wherein
the disclosure processing unit (52) is configured to generate the output data such that, out of the confidential data common to a plurality of users, portions are disclosed that are different depending on the user, in accordance with the disclosure method information selected by the disclosure method selection unit (51).

3. The portable electronic device (1) according to claim 1 or 2, further comprising:
a disclosure method storage (82) configured to store the user identification information and the disclosure method information in association with each other,
wherein the disclosure method selection unit (51) is configured to acquire the disclosure method information corresponding to the user identification information from the disclosure method storage (82), and
the disclosure processing unit (52) is configured to generate output data in which at least a portion of the confidential data is hidden in accordance with the disclosure method information acquired by the disclosure method selection unit (51), and to transmit the output data to the external apparatus (2).

4. The portable electronic device (1) according to claim 3, comprising:
a registration processing unit (53) configured to store first user identification information received from the external apparatus (2) and disclosure method information received from the external apparatus (2) in association with each other in the disclosure method storage (82), in response to a registration request received from the external apparatus (2).

5. The portable electronic device (1) according to claim 3 or 4, wherein
the disclosure method storage (82) is configured to store the disclosure method information which includes information indicating a portion of the confidential data to be disclosed or information indicating a portion of the confidential data to be hidden.

6. The portable electronic device (1) according to claim 3 or 4, wherein
the disclosure method storage (82) stores the disclosure method information which includes information indicating at least one data item of the confidential data that is to be disclosed, or information indicating at least one data item of the confidential data that is to be hidden.

7. The portable electronic device (1) according to any one of claims 3 to 6, wherein
if the user identification information received from the external apparatus (2) is not stored in the disclosure method storage (82), the disclosure processing unit (52) transmits, to the external apparatus (2), state information indicating that the confidential data cannot be disclosed.

8. The portable electronic device (1) according to claim 7, wherein,
if the user identification information received from the external apparatus (2) is not stored in the disclosure method storage (82), the disclosure processing unit (52) generates output data in which the confidential data is entirely hidden, and transmits the output data to the external apparatus (2).

9. The portable electronic device (1) according to any one of claims 3 to 8, wherein
the disclosure method storage (82) is configured to store a plurality of pieces of user identification information and the disclosure method information in association with each other, and
the disclosure method selection unit (51) is configured to acquire, from the disclosure method storage (82), the disclosure method information corresponding to the plurality of pieces of user identification information received from the external apparatus (2).

10. The portable electronic device (1) according to claim 9, further comprising:
a number-of-receptions determination unit (54) configured to, if the number of pieces of user identification information received from the external apparatus (2) reaches the number of a plurality of pieces of user identification information stored in association with the disclosure method information in the disclosure method storage (82), cause the disclosure method selection unit (51) to acquire, from the disclosure method storage (82), the disclosure method information corresponding to the plurality of pieces of user identification information, and if the number of pieces of received user identification information does not reach the number of a plurality of pieces of user identification information, to transmit, to the external apparatus (2), number-of-receptions information indicating the number of additional receptions required to reach the number of a plurality of pieces of user identification information.

11. The portable electronic device (1) according to any one of claims 1 to 10, further comprising:
an authentication processing unit (55) configured to authenticate a user,
wherein, if the user has been authenticated by the authentication processing unit (55), the disclosure processing unit (52) generates output data in which at least a portion of the confidential data is hidden in accordance with the data disclosure method indicated by the disclosure method information selected by the disclosure method selection unit (51), and transmits the output data to the external apparatus (2).

12. The portable electronic device (1) according to claim 11, wherein
if a user authenticated by the authentication processing unit (55) matches a user corresponding to the user identification information, the disclosure processing unit (52) generates output data in which at least a portion of the confidential data is hidden in accordance with the disclosure method information selected by the disclosure method selection unit (51), and transmits the output data to the external apparatus (2).

13. The portable electronic device (1) according to claim 11 or 12, further comprising:
an authentication result storage (71) configured to store the user identification information and authentication result information indicating whether or not a user has been authenticated by the authentication processing unit (55) in association with each other,
wherein, if the authentication result information stored in association with the user identification information received from the external apparatus (2) in the authentication result storage (71) is information indicating that the user has been authenticated, the disclosure processing unit (52) generates output data in which at least a portion of the confidential data is hidden in accordance with the disclosure method information selected by the disclosure method selection unit (51), and transmits the output data to the external apparatus (2).

14. The portable electronic device (1) according to claim 3, wherein
the confidential data storage (81) is configured to store a plurality of pieces of confidential data and data identification information for identifying each of the plurality of pieces of confidential data in association with each other,
the disclosure method storage (82) stores the user identification information, the data identification information and the disclosure method information in association with each other,
based on the user identification information received from the external apparatus (2) and the data identification information received from the external apparatus (2), the disclosure method selection unit (51) is configured to select, from the disclosure method storage (82), the disclosure method information corresponding to the received user identification information and received data identification information, and
the disclosure processing unit (52) is configured to acquire confidential data corresponding to the data identification information received from the confidential data storage (81) based on the received data identification information, to generate output data in which at least a portion of the acquired confidential data is hidden in accordance with the data disclosure method indicated by the disclosure method information selected by the disclosure method selection unit (51), and to transmit the output data to the external apparatus (2).

15. The portable electronic device (1) according to any one of claims 1 to 14, wherein
the portable electronic device (1) is an IC card comprising an IC module and a card main body in which the IC module is embedded, and
the IC module comprises the confidential data storage (81), the disclosure method selection unit (51) and the disclosure processing unit (52) according to claim 1.
